# EUROPÄISCHE PATENTSCHRIFT

(11) **EP 3 388 287 B1**
(45) Veröffentlichungstag und Bekanntmachung des Hinweises auf die Patenterteilung: **02.12.2020**
(21) Anmeldenummer: 18160714.4
(22) Anmeldetag: 08.03.2018
(51) Int. Cl.: B60R 5/04

(54) **KRAFTFAHRZEUG MIT EINER LADERAUMABDECKUNG**
MOTOR VEHICLE WITH A CARGO AREA COVER
VÉHICULE AUTOMOBILE DOTÉ D'UN RECOUVREMENT DE COMPARTIMENT POUR LOGER DES MARCHANDISES

(30) Priorität: 12.04.2017 DE 102017206309; 22.01.2018 DE 102018200940
(43) Veröffentlichungstag der Anmeldung: 17.10.2018
(60) Teilanmeldung: 20185415.5
(73) Patentinhaber: Ford Global Technologies, LLC, Dearborn, MI 48126 (US)
(72) Erfinder: Loewe, Thomas, 74722 Buchen (DE); Fuss, Christoph, 50739 Köln (DE); Causemann, Christian, 50823 Köln (DE); Schneider, Frank, 58642 Iserlohn (DE); Baumann, Matthias, 52070 Aachen (DE); Kaatz, Sascha, 50733 Köln (DE)
(74) Vertreter: Markowitz, Markus

(56) Entgegenhaltungen:
- DE-U1-202015 005 733
- FR-A1- 2 819 459
- JP-A- 2013 035 380

## Beschreibung

Die vorliegende Erfindung betrifft ein Kraftfahrzeug mit einer Laderaumabdeckung nach dem Oberbegriff des Anspruchs 1.

Laderaumabdeckungen für Kraftfahrzeuge zum Abdecken eines hinter einem Sitz des Kraftfahrzeugs gelegenen, innerhalb eines Fahrgastraums befindlichen Laderaums sind allgemein bekannt. Derartige Laderaumabdeckungen bieten einerseits bei geschlossener Heckklappe einen Sichtschutz, so dass das Innere des Laderaums bei geschlossener Heckklappe von außen nicht eingesehen werden kann, und sind andererseits gleichzeitig mit dem Aufschwenken der Heckklappe den Zugang zum Laderaum freigebend ebenfalls verschwenkbar, so dass bei geöffneter Heckklappe Objekte in den Laderaum gelegt oder aus diesem entnommen werden können, ohne dass Teile der Laderaumabdeckung manuell entfernt oder wegbewegt werden müssten. Zudem verringert eine geschlossene Laderaumabdeckung in vorteilhafter Weise die Übertragung von unerwünschten Geräuschen aus dem Laderaum bzw. dem Heckbereich des Kraftfahrzeugs in den Fahrgastraum und verbessert somit dessen NVH-Eigenschaften (Noise, Vibration, Harshness).

Gewöhnlich sind derartige Laderaumabdeckungen mit ihrem vorderen Endbereich schwenkbeweglich am Fahrzeugaufbau gelagert, zum Beispiel an Seitenteilen des Laderaums im Bereich einer rückwärtigen Sitzlehnenoberkante, und mit ihrem hinteren Endbereich über jeweils ein an jeder Seite der Laderaumabdeckung angebrachtes Band oder Zugseil mit der Heckklappe verbunden, so dass die Heckklappe beim Aufschwenken nach hinten oben die Laderaumabdeckung ebenfalls nach oben verschwenkt, um hierdurch den Zugang zum Laderaum freizugeben. Derartige Laderaumabdeckungen für Kraftfahrzeuge offenbaren beispielsweise die DE 10 2014 224 887 A1 und die US 8 528 957 B2 (auch DE 10 2012 210 964 A1).

Eine Variante einer hierzu sehr ähnlichen Laderaumabdeckung für ein Kraftfahrzeug zeigt weiterhin die US 8 172 296 B2, wobei die Laderaumabdeckung hier zusätzlich in einen vorderen Abdeckungsabschnitt und einen hinteren Abdeckungsabschnitt geteilt ist, um den Zugangsbereich zum Laderaum des Kraftfahrzeugs zu vergrößern und dadurch das Einbringen und Entnehmen von größeren Gegenständen in den bzw. aus dem Laderaum zu vereinfachen. Der vordere Abdeckungsabschnitt der Laderaumabdeckung ist wie vorstehend beschrieben am Kraftfahrzeug angebracht. Der hintere Abdeckungsabschnitt ist hingegen fest mit der Heckklappe verbunden, so dass er sich vollständig mit der Heckklappe mitbewegt und nur im geschlossenen Zustand der Heckklappe derart an den vorderen Abdeckungsabschnitt der Laderaumabdeckung angrenzt, dass beide Abschnitte eine einzige, ebene, horizontale Fläche bilden.

Eine relativ zu einer Heckklappe eines Kraftfahrzeugs starr mit dieser verbundene Laderaumabdeckung zeigt ferner die JP 2003-2120 A. Die Laderaumabdeckung ist aus einem ein Netz aufspannenden Rahmen gebildet. Die Befestigung der Laderaumabdeckung an der Heckklappe sieht an jeder Fahrzeugseite der Heckklappe jeweils eine an der Heckklappeninnenseite angebrachte, sich nach unten erstreckende Strebe mit einem hakenförmig ausgebildeten freien Ende vor, das mit einer in einem Seitenteil des Rahmens der Laderaumabdeckung auf der Unterseite ausgebildeten Ausnehmung lösbar in Eingriff bringbar ist. An dem rückwärtigen Teil des Rahmens sind Zapfen vorgesehen, die in entsprechende Ausnehmungen der Heckklappe einführbar sind. Um die Laderaumabdeckung von der Heckklappe zu lösen, können der Rahmen der Laderaumabdeckung aus den Haken der Seitenstreben gehoben und anschließend die Zapfen aus den Aufnahmen der Heckklappe gezogen werden.

Einen Mechanismus zur schwenkbeweglichen Befestigung einer Laderaumabdeckung für ein Kraftfahrzeug an einer Heckklappe des Kraftfahrzeugs, bei dem die Laderaumabdeckung an einem der Heckklappe des Kraftfahrzeugs zugewandten Endabschnitt an der Heckklappe um eine Schwenkachse schwenkbeweglich gehalten und an einem vorderseitigen Abschnitt am Fahrzeugaufbau gehalten ist, zeigen beispielsweise die DE 196 04 214 A1, die JP 2013-35380 A und die FR 2 819 459 A1. Im geschlossenen Zustand der Heckklappe deckt die Laderaumabdeckung einen hinter einem Fahrzeugsitz gelegenen, innerhalb eines Fahrgastraums befindlichen Laderaum des Kraftfahrzeugs ab. Beim Aufschwenken der Heckklappe nach hinten oben verschwenkt die Laderaumabdeckung ebenfalls nach hinten oben, um einen Zugang zum Laderaum freizugeben. Damit die Laderaumabdeckung im geöffneten Zustand der Heckklappe infolge der Schwerkraft nicht lotrecht nach unten hängt und den Zugang zum Laderaum behindert, wird sie in diesem Zustand durch die vorder- und fahrzeugaufbauseitige Anbindung um einen gewissen Winkel gegen die Lotrichtung in Richtung des Fahrgastraumes gezogen, um so den Zugangsbereich zum Laderaum zu vergrößern.

Die DE 196 04 214 A1 sieht hierzu ein in seiner Längserstreckung elastisches Kraftübertragungsmittel in Form eines Gummibands vor, das einenends am Fahrzeugaufbau, insbesondere am Fahrzeugboden, und anderenends am vorderseitigen Abschnitt der Laderaumabdeckung befestigt ist. Um den Öffnungswinkel der Laderaumabdeckung weiter zu vergrößern, ist das Gummiband entlang seines Verlaufs zwischen dem Fahrzeugboden und der Laderaumabdeckung an einem an einer Rückseite eines Fahrzeugsitzes befestigten Umlenkmittel umgelenkt.

Bei der gattungsgemäßen JP 2013-35380 A ist der vorderseitige Abschnitt der Laderaumabdeckung mittels seilförmiger Kraftübertragungsmittel an einer Dachstruktur des Fahrzeugaufbaus befestigt, die den vorderseitigen Abschnitt der Laderaumabdeckung bei geöffneter Heckklappe in Richtung Dachstruktur ziehen. Die Kraftübertragungsseile können in an der Dachstruktur vorgesehenen Ösen eingehakt werden.

Die FR 2 819 459 A1 schlägt vor, ein seilartiges Kraftübertragungsmittel an dem vorderseitigen Abschnitt der Laderaumabdeckung und an einem Seitenwandabschnitt eines Fahrzeugaufbaus zu befestigen, wobei das Kraftübertragungsseil an einem an der Heckklappe befestigten schlaufenartigen Umlenkmittel umgelenkt ist, durch welches das Kraftübertragungsseil hindurchgeht und durch welches es je nach Öffnungszustand der Heckklappe gleiten kann, um die Laderaumabdeckung in vollständig geöffnetem Zustand der Heckklappe in Richtung Heckklappe zu ziehen. Die schwenkbewegliche Anbindung des rückwärtigen Abschnitts der Laderaumabdeckung sieht eine Haken-Öse-Verbindung vor, wobei ein an der Heckklappe befestigtes hakenförmiges, bogenförmig verlaufendes Haltemittel in eine an der Laderaumabdeckung bereitgestellte Öffnung einer Öse eingreift. Während einer Aufschwenkbewegung der Heckklappe gleitet die Ösenöffnung zunächst den bogenförmigen Hakenabschnitt entlang, um eine Verschwenkung der Laderaumabdeckung relativ zur Heckklappe zu ermöglichen, um bei vollständig geöffneter Heckklappe schließlich gegen einen, einen Formschluss mit der Öse bildenden Endanschlag des Hakens zu stoßen. Zum zerstörungsfreien Trennen der Haken-Öse-Verbindung wird die fahrzeugaufbauseitige, vorderseitige Befestigung der Laderaumabdeckung zuerst gelöst, um die Laderaumabdeckung bei geöffnetem Zustand der Heckklappe manuell in eine lotrechte Stellung verschwenken zu können, in welcher die Öse über den Endanschlag des Hakens hinweg geschoben werden kann.

Die DE 20 2015 005 733 U1 offenbart eine Hutablage zur oberseitigen Begrenzung und Abdeckung eines Kofferraumes eines Kraftfahrzeugs umfassend Lagerelemente zur beweglichen Lagerung der Hutablage an einem vorderseitigen Endbereich der Hutablage, und an einem Kraftfahrzeug zu befestigende Gegenlagerelemente, wobei je ein Lagerelement über einen Lagerschlitz eines Gegenlagerelementes in das Gegenlagerelement einführbar ist. wobei die Lagerelemente und die Gegenlagerelemente dahingehend ausgebildet sind, dass in einer Verriegelungsstellung, in der die Lagerelemente in den Gegenlagerelementen aufgenommen sind, die Lagerelemente und Gegenlagerelemente in einer im Wesentlichen zu einer Schwenkachse der Lagerelemente vertikalen Richtung relativ zueinander beweglich sind, indem die Lagerelemente durch Zusatzöffnungen aus den Gegenlagerelementen oder die Gegenlagerelemente durch Zusatzöffnungen aus den Lagerelementen (heraus bewegbar sind, so dass nach dem Herausbewegen die Lagerung der Lagerelemente an den Gegenlagerelementen in einer Entriegelungsstellung aufgehoben ist.

Vor diesem Hintergrund liegt der vorliegenden Erfindung die Aufgabe zugrunde, ein Kraftfahrzeug mit einer Laderaumabdeckung für einen hinter einem Sitz des Kraftfahrzeugs gelegenen und innerhalb eines Fahrgastraums befindlichen Laderaum zu schaffen, wobei das Kraftfahrzeug bei einer geöffneten Heckklappe einen größtmöglichen Zugang zum Laderaum bereitstellt, um das Einbringen und Entnehmen auch von großen Gegenständen in den bzw. aus dem Laderaum zu erleichtern. Darüber hinaus sollen insbesondere beim Verschließen des Zugangs zum Laderaum übergroße in den Laderaum eingebrachte Gegenstände vor einer Beschädigung durch die Laderaumabdeckung bewahrt bleiben. Der Mechanismus zum Freigeben und Verschließen des Zugangs zum Laderaum soll außerdem einen einfachen und somit kostengünstig herstellbaren Aufbau aufweisen.

Diese Aufgabe wird durch ein Kraftfahrzeug mit den Merkmalen des Anspruchs 1 gelöst. Weitere besonders vorteilhafte Ausgestaltungen der Erfindung offenbaren die jeweiligen Unteransprüche.

Es ist darauf hinzuweisen, dass die in der nachfolgenden Beschreibung einzeln aufgeführten Merkmale in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Ein Kraftfahrzeug weist eine nach hinten oben aufschwenkbare Heckklappe auf, an der mit ihrem hinteren, der Heckklappe zugewandten Endbereich eine Laderaumabdeckung zur Abdeckung eines hinter einem Sitz gelegenen, innerhalb eines Fahrgastraums befindlichen Laderaums um eine Schwenkachse schwenkbeweglich gehalten ist. Damit die Heckklappe nach hinten oben aufschwenkbar ist, kann sie in an sich bekannter Weise an ihrem oberen Endbereich an einem Fahrzeugaufbau, zum Beispiel am Fahrzeugdach, um eine Fahrzeugquerachse schwenkbeweglich befestigt sein.

Die Laderaumabdeckung ist weiterhin an einem zur Schwenkachse beabstandeten Bereich über wenigstens ein Kraftübertragungsmittel an einem Fahrzeugaufbau gehalten, wobei das Kraftübertragungsmittel die Laderaumabdeckung beim Aufschwenken der Heckklappe einen Zugang zum Laderaum freigebend zur Heckklappe hin verschwenkt. Weiterhin ist wenigstens eine die Heckklappe mit der Laderaumabdeckung verbindende, die Schwenkachse festlegende Hakenverbindung vorgesehen, die ein hakenförmiges Haltemittel und ein mit diesem in Eingriff bringbares Gegenhaltemittel aufweist. Es ist zu verstehen, dass hierzu entweder das hakenförmige Haltemittel an der Heckklappe befestigt ist und das Gegenhaltemittel am heckklappenseitigen Endbereich der Laderaumabdeckung oder das hakenförmige Haltemittel am heckklappenseitigen Endbereich der Laderaumabdeckung befestigt ist und das Gegenhaltemittel an der Heckklappe.

Als hakenförmiges Haltemittel im Sinne der vorliegenden Erfindung ist jedes Mittel zu verstehen (hierin nachfolgend einfachheitshalber auch als Haken bezeichnet), das im Wesentlichen U-, J- oder L-förmig ausgebildet ist, dementsprechend also geschwungen und/oder eckig gekrümmt geformt ist. Das hakenförmige Haltemittel ist umfänglich jedoch nicht vollständig geschlossen ausgebildet, wie beispielsweise ein Ring, sondern weist eine umfängliche Unterbrechung auf, die dazu dient, das Gegenhaltemittel in den Haken einzuführen und gegebenenfalls wieder aus diesem zu entfernen, um die Hakenverbindung zerstörungsfrei zu lösen.

Als Gegenhaltemittel ist im Sinne der vorliegenden Erfindung jedes Mittel zu verstehen, das geeignet ist, mit dem hakenförmigen Haltemittel eine lösbare formschlüssige Verbindung in Bezug auf wenigstens eine Wirkrichtung einer an dem Gegenhaltemittel angreifenden Kraft einzugehen. Eine solche Kraft kann beispielsweise eine zwischen dem Haken und dem Gegenhaltemittel wirkende Zugkraft sein. Das Gegenhaltemittel kann dementsprechend beispielsweise als umfänglich vollständig geschlossener Ring oder Öse ausgebildet sein. Das Gegenhaltemittel kann jedoch ebenso hakenförmig, wie vorstehend definiert, oder auch zapfenförmig ausgebildet sein.

Gemäß der Erfindung ist die Hakenverbindung derart ausgebildet, dass das hakenförmige Haltemittel das Gegenhaltemittel bei einer Aufschwenkbewegung der Heckklappe formschlüssig hält und bei einer zur Aufschwenkbewegung entgegengesetzten Abschwenkbewegung der Heckklappe das Gegenhaltemittel ab einer der Abschwenkbewegung entgegenstehenden, auf die Laderaumabdeckung einwirkenden Kraft einer vorherbestimmbaren Größe zerstörungsfrei freigibt.

Das formschlüssige Halten des Gegenhaltemittels durch den Haken beim Aufschwenken der Heckklappe nach hinten oben stellt sicher, dass sich die Laderaumabdeckung gemeinsam mit der Heckklappe ebenfalls nach hinten oben bewegt. Hierbei bewirkt die Anbindung des zur Schwenkachse beabstandeten Bereichs der Laderaumabdeckung an den Fahrzeugaufbau über das Kraftübertragungsmittel eine Verschwenkung der Laderaumabdeckung hin zur Heckklappe, wodurch der Zugang zum Laderaum des Kraftfahrzeugs vergrößert wird.

Bei der der Aufschwenkbewegung entgegengesetzten Abschwenkbewegung der Heckklappe, das heißt bei einem Schließvorgang der Heckklappe, kann die auf die Laderaumabdeckung wirkende Schwerkraft vorteilhaft genutzt werden, die Laderaumabdeckung in ihre vorgesehene Position zum Abdecken des Laderaums bei vollständig geschlossener Heckklappe zurückzubewegen, so dass das Innere des Laderaums bei geschlossener Heckklappe von außen nicht einsehbar ist.

Befindet sich jedoch im Laderaum ein übergroßer Gegenstand, der beispielsweise nach dem Öffnen der Heckklappe in den Laderaum eingebracht wurde, das heißt ein Gegenstand, dessen Höhe insbesondere über die eigentlich vorgesehene, vertikale Position der Laderaumabdeckung im geschlossenen Zustand der Heckklappe hinausragt, wird die Laderaumabdeckung bei der Abschwenkbewegung der Heckklappe zum Beispiel mit ihrer Vorderkante gegen den übergroßen Gegenstand stoßen, so dass dieser einer der Abschwenkbewegung der Heckklappe folgenden Bewegung der Laderaumabdeckung entgegensteht und diese behindert bzw. blockiert. Die Laderaumabdeckung kann folglich im weiteren Verlauf der Schließbewegung der Heckklappe zwischen dem Gegenstand und der Heckklappe eingeklemmt werden, infolgedessen der übergroße Gegenstand im Laderaum des Kraftfahrzeugs durch die von der Heckklappe auf die Laderaumabdeckung ausgeübten Druckkraft beschädigt werden könnte. Dies wird jedoch durch die vorliegende Erfindung wirksam verhindert, da sich die Hakenverbindung infolge der durch den übergroßen Gegenstand auf die Laderaumabdeckung ausgeübten Gegenkraft, die der von der Heckklappe auf die Laderaumabdeckung ausgeübten Druckkraft entgegengesetzt ist, zerstörungsfrei löst, so dass der der Heckklappe zugewandte hintere Endbereich der Laderaumabdeckung nach dem Lösen der Hakenverbindung nicht mehr mit der Heckklappe verbunden ist und sich dieser im weiteren Verlauf der Schließbewegung der Heckklappe relativ zur Heckklappe frei bewegen kann, zum Beispiel an ihrer Innenseite entlang gleiten kann.

In besonders vorteilhafter Weise kann die vorstehend offenbarte Hakenverbindung auch dazu benutzt werden, den der Heckklappe zugewandten Endbereich der Laderaumabdeckung manuell von der Heckklappe zu lösen, indem beispielsweise bei geöffneter Heckklappe eine der normalen Abschwenkbewegung der Laderaumabdeckung entgegenstehende Kraft (Gegenkraft) manuell auf die Laderaumabdeckung ausgeübt wird und dadurch das zerstörungsfreie Lösen der Hakenverbindung, das heißt die Freigabe des Gegenhaltemittels aus dem hakenförmigen Haltemittel, erzielt wird.

Der Mechanismus zum Verschwenken der Laderaumabdeckung zum Freigeben und Verschließen des Laderaumzugangs in Abhängigkeit von einem Aufschwenkwinkel der Heckklappe weist vorteilhafterweise einen sehr einfachen und kostengünstig herstellbaren Aufbau auf, da die Laderaumabdeckung einerseits über eine einfache Hakenverbindung schwenkbeweglich an der Heckklappe befestigbar ist und andererseits lediglich das den zur Schwenkachse beabstandeten Bereich der Laderaumabdeckung haltende Kraftübertragungsmittel zwischen dem Fahrzeugaufbau und der Laderaumabdeckung vorgesehen ist.

Gemäß einer möglichen Ausgestaltung weist das hakenförmige Haltemittel eine zu einer Innenseite der Heckklappe beabstandete Gleitfläche auf, entlang welcher das Gegenhaltemittel nach seiner Freigabe durch das hakenförmige Haltemittel gleitet und geführt ist. Dies ermöglicht eine gezielte Bewegung des der Heckklappe zugewandten Endbereichs der Laderaumabdeckung relativ zur Heckklappe in dem zuvor beschriebenen Fall, bei dem während der Abschwenkbewegung der Heckklappe eine unerwartete, der Abschwenkbewegung entgegengesetzte Gegenkraft auf die Laderaumabdeckung mit einer bestimmten Größe einwirkt. Die zur Innenseite der Heckklappe beabstandete Gleitfläche verringert in erheblichem Maße die Möglichkeit, dass der der Heckklappe zugewandte Endbereich der Laderaumabdeckung bei seiner Bewegung relativ zur Heckklappe beispielsweise mit einem von der Innenseite der Heckklappe vorstehenden Element oder Bauteil der Heckklappe in einen formschlüssigen Eingriff gelangt, was erneut zu einer großen, möglicherweise schädigenden Krafteinwirkung von der Heckklappe über die Laderaumabdeckung auf den übergroßen Gegenstand führen würde.

Gemäß einer vorteilhaften Ausgestaltung der Erfindung weist das hakenförmige Haltemittel eine innenseitige Haltefläche mit Ω-förmiger (Omega-förmiger) Kontur auf, die eine Außenseite des mit dem hakenförmigen Haltemittel in Eingriff stehenden Gegenhaltemittels umfänglich bereichsweise umgibt. Wie bereits weiter oben erläutert wurde, ist das hakenförmige Haltemittel umfänglich nicht vollständig geschlossen, sondern weist eine umfängliche Unterbrechung auf, über die das Gegenhaltemittel mit dem Haken in Eingriff bringbar ist. Unter einer Ω-förmigen Kontur der innenseitigen Haltefläche des hakenförmigen Haltemittels ist im Sinne der vorliegenden Erfindung eine solche Kontur zu verstehen, die die Außenseite des mit dem hakenförmigen Haltemittel in Eingriff stehenden Gegenhaltemittels umfänglich mit einem Umfangswinkel größer als 180 Grad und kleiner als 360 Grad umgibt. Dementsprechend ist der direkte Abstand der beiden freien Umfangsenden der Hakenhaltefläche, die die umfängliche Unterbrechung des hakenförmigen Haltemittels begrenzen, hierin auch als Öffnungsweite bezeichnet, kleiner als der Innendurchmesser der Kontur der innenseitigen Haltefläche.

Wird ein Außendurchmesser des mit dem hakenförmigen Haltemittel in Eingriff stehenden Gegenhaltemittels so gewählt, dass dieser größer ist als die Öffnungsweite des hakenförmigen Haltemittels und gleich groß oder kleiner als der Innendurchmesser der Hakenhalteflächenkontur, so ist zum Einbringen des Gegenhaltemittels in den Haken eine bestimmte Widerstandskraft zu überwinden, um das Gegenhaltemittel durch die im Vergleich zu seinem Außendurchmesser kleinere Öffnungsweite des Hakens zu drücken. Gleiches gilt bei umgekehrtem Vorgang, das heißt beim Lösen des Gegenhaltemittels aus dem hakenförmigen Haltemittel. Es ist zu verstehen, dass das hakenförmige Haltemittel insbesondere im Bereich der Umfangsenden der Hakenhaltefläche für ein zerstörungsfreies Herstellen und Lösen der Hakenverbindung eine gewisse Elastizität aufweisen muss, die wenigstens ein kurzfristiges, zerstörungsfreies, elastisches Aufweiten der Öffnungsweite zum Durchführen des Gegenhaltemittels gestattet.

Die vorstehend beschriebene Ausgestaltung bietet den Vorteil, dass eine einmal hergestellte Hakenverbindung zwischen dem hakenförmigen Haltemittel und dem von diesem aufgenommenen Gegenhaltemittel erst durch Überwinden einer gewissen Widerstandskraft gelöst werden kann, so dass eine sichere, stabile Lagerung der Laderaumabdeckung an der Heckklappe unter normalen Betriebsbedingungen gewährleistet ist und erst in dem Fall des Auftretens einer auf die Hakenverbindung einwirkenden, außergewöhnlich hohen Kraft, wie sie beispielsweise in dem oben geschilderten Fall eines übergroßen Gegenstands im Laderaum auftreten kann, die wenigstens der erforderlichen Widerstandskraft zum Lösen des Gegenhaltemittels aus dem Haken entspricht, die Hakenverbindung gelöst wird. Ein manuelles Lösen der Hakenverbindung ist somit möglich.

Eine weitere vorteilhafte Ausgestaltung der Erfindung sieht vor, dass ein größter Innendurchmesser der innenseitigen Haltefläche des hakenförmigen Haltemittels eine Größe aufweist, die wenigstens der Größe eines Außendurchmessers der mit dem hakenförmigen Haltemittel in Eingriff bringbaren Außenseite des Gegenhaltemittels entspricht. Dies stellt eine leichtgängige Schwenkbarkeit des Gegenhaltemittels in dem hakenförmigen Haltemittel mit geringen Reibungsverlusten sicher.

Eine weitere vorteilhafte Ausgestaltung der Erfindung sieht vor, dass die fahrzeugaufbauseitige Anbindung des Kraftübertragungsmittels an einer der Heckklappe vorgelagerten Fahrzeugsäule, insbesondere einer der Heckklappe unmittelbar vorgelagerten Fahrzeugsäule wie zum Beispiel eine C-Säule oder D-Säule, erfolgt. Auf diese Weise kann das Kraftübertragungsmittel auf direktem Weg zum Kraftumlenkmittel geführt werden, ohne dass weitere Kraftumlenkmittel zur Führung des Kraftübertragungsmittels von seiner fahrzeugaufbauseitigen Anbindungsstelle zum heckklappenseitigen Kraftumlenkmittel vorgesehen werden müssten. Dies vereinfacht den Aufbau erheblich.

Erfindungsgemäß ist das Kraftübertragungsmittel ein Zugseil, das Halte- bzw. Zugkräfte zwischen der Laderaumabdeckung und dem Fahrzeugaufbau überträgt. So kann das Kraftübertragungsmittel vorteilhafterweise ausgelegt sein, lediglich Zugkräfte zu übertragen. Dies vereinfacht den Aufbau des Kraftfahrzeugs mit Laderaumabdeckung noch einmal wesentlich, da das Kraftübertragungsmittel lediglich auf die Übertragung von Zugkräften und nicht zusätzlich auch auf die Übertragung von Schubkräften auszulegen ist. Somit kann das Verschwenken der Laderaumabdeckung zur Freigabe des Zugangs zum Laderaum während des Aufschwenkens der Heckklappe in ihre Öffnungsstellung durch eine vom Kraftübertragungsmittel zwischen dem Fahrzeugaufbau und der Laderaumabdeckung übertragenen Zugkraft erfolgen, während das Zurückschwenken der Laderaumabdeckung zum Schließen des Zugangs zum Laderaum während des Abschwenkens der Heckklappe in ihre Schließstellung mit Hilfe der auf die Laderaumabdeckung einwirkenden Schwerkraft erfolgen kann. Dieser Aufbau lässt sich mit einfachen, kostengünstigen Mitteln realisieren.

Um eine stets gleiche, definierte Schwenkbewegung der Laderaumabdeckung beim Aufschwenken der Heckklappe zu erreichen, die zudem nach dem vollständigen Aufschwenken der Heckklappe zu einer größtmöglichen Öffnung des Laderaumzugangs führt, kann das Kraftübertragungsmittel in Kraftübertragungsrichtung im Wesentlichen nicht elastisch bzw. unelastisch sein.

Erfindungsgemäß ist das Kraftübertragungsmittel an einem an der Heckklappe angebrachten Kraftumlenkmittel umgelenkt. Hierunter ist zu verstehen, dass die Kraftwirkungsrichtung des Kraftübertragungsmittels durch das Kraftumlenkmittel von einer ersten Richtung in eine zweite, von der ersten Richtung verschiedene Richtung geändert wird. Hierdurch wird erreicht, dass die Laderaumabdeckung beim Aufschwenken der Heckklappe noch weiter zur Heckklappe hin verschwenkt wird und nach dem Aufschwenken der Heckklappe im Wesentlichen parallel zur Heckklappe gehalten ist. Die Größe des Zugangs zum Laderaum wird in diesem Fall nur noch von dem Öffnungswinkel der Heckklappe bestimmt, da nach dem vollständigen Aufschwenken der Heckklappe kein Bereich der Laderaumabdeckung mehr den Zugangsbereich zum Laderaum verkleinernd angeordnet ist. Im geschlossenen Zustand der Heckklappe verschließt die Laderaumabdeckung den Zugang zum Laderaum in herkömmlicher Weise vollständig, so dass das Innere des Laderaums bei geschlossener Heckklappe von außen nicht eingesehen werden kann. Die Erfindung stellt somit bei geöffneter Heckklappe einen größtmöglichen Zugang zum Laderaum bereit, so dass das Einbringen und Entnehmen auch von großen Gegenständen in den bzw. aus dem Laderaum wesentlich erleichtert ist.

Das Kraftumlenkmittel ist erfindungsgemäß ein Umlenkzugseil. Das Kraftumlenkmittel ist erfindungsgemäß an der Heckklappe angeordnet bzw. angebracht und lenkt die von dem Kraftübertragungsmittel, vorgegebene Kraftwirkungsrichtung um, indem das Kraftübertragungsmittel von dem erfindungsgemäßen Umlenkzugseil in eine bestimmte Richtung schräg oder quer zur eigentlichen Kraftübertragungsrichtung des Kraftübertragungsmittels gehalten ist.

Das Umlenkzugseil Umlenkzugseils kann eine bewegungsfeste Verbindung mit dem Kraftübertragungsmittel aufweisen, die keine Relativbewegung zwischen dem Kraftübertragungsmittel und dem Kraftumlenkmittel zulässt, so dass keine Reibung bzw. Reibungskräfte zwischen dem Kraftübertragungsmittel und dem Kraftumlenkmittel während der Auf- und Abschwenkbewegung der Heckklappe auftreten. Außerdem stellt die Kraftumlenkung des Kraftübertragungsmittels mittels des mit diesem fest verbundenen Umlenkungszugseils eine besonders kostengünstig realisierbare Lösung dar. Die bewegungsfeste Verbindung kann beispielsweise eine Steck-, Klemm-, Clip- oder Nähverbindung sein oder auch durch eine stoffschlüssige Verbindungstechnik, zum Beispiel durch Kleben, hergestellt sein.

Besonders bevorzugt ist jeweils an jeder Fahrzeugseite der Laderaumabdeckung ein an diese angebundenes Kraftübertragungsmittel vorgesehen, das, bei Vorhandensein von Kraftumlenkmitteln, jeweils über ein seitlich an der Heckklappe angebrachtes Kraftumlenkmittel umgelenkt ist. Somit sind bei dieser Ausgestaltung insgesamt zwei Kraftübertragungsmittel und eventuell zwei Kraftumlenkmittel vorgesehen, die jeweils zu beiden Seiten der Laderaumabdeckung in Fahrzeugquerrichtung angeordnet sind und so für eine gleichmäßige Schwenkbewegung der Laderaumabdeckung beim Auf- und Abschwenken der Heckklappe sorgen, ohne dass die Laderaumabdeckung hierbei verkantet oder tordiert wird.

Der zur Schwenkachse beabstandete Bereich der Laderaumabdeckung, an dem das Kraftübertragungsmittel an der Laderaumabdeckung angebunden ist, kann ein vorderer Endbereich der Laderaumabdeckung sein. Der vordere Endbereich kann hierbei zum Beispiel etwa 1/3 der Längserstreckung der Laderaumabdeckung in Fahrzeuglängsrichtung oder weniger aufweisen, bevorzugt zum Beispiel etwa 1/4 und besonders bevorzugt etwa 1/5 der gesamten Längserstreckung der Laderaumabdeckung in Fahrzeuglängsrichtung. Auf diese Weise ist infolge des relativ großen Abstands zwischen der Schwenkachse der Laderaumabdeckung an der Heckklappe und der Anbindungsstelle des Kraftübertragungsmittels an der Laderaumabdeckung in ihrem vorderen Endbereich aufgrund der großen Hebelwirkung nur ein geringer Kraftaufwand erforderlich, um die Laderaumabdeckung beim Aufschwenken der Heckklappe an diese heranzuziehen. Das Kraftübertragungsmittel kann dementsprechend für eine geringe Kraftübertragung ausgelegt und so auf besonders einfache Weise ausgestaltet werden.

Außerdem kann durch die Wahl der Anbindungsstelle des Kraftübertragungsmittels an der Laderaumabdeckung in ihrem vorderen Endbereich in vorteilhafter Weise bei Vorhandensein des Kraftumlenkmittels der Abstand zwischen dem an der Heckklappe angeordneten Kraftumlenkmittel und der Anbindungsstelle des Kraftübertragungsmittels an der Laderaumabdeckung derart festgelegt werden, dass dieser Abstand in etwa der Verschwenkstrecke des an der Heckklappe angebrachten Kraftumlenkmittels beim Aufschwenken der Heckklappe in ihre vollständig geöffnete Stellung entspricht, so dass die Laderaumabdeckung nach dem Aufschwenken im Wesentlichen vollständig parallel zur Heckklappe gehalten ist. Zusätzlich kann auch die Anordnung des Kraftumlenkmittels entlang der Heckklappe im Sinne einer Festlegung des vorerwähnten Abstands gewählt werden.

Weiterhin ist eine noch weitere Vereinfachung des Kraftfahrzeugaufbaus erzielbar, indem das Kraftübertragungsmittel und das eventuell vorhandene Kraftumlenkmittel im Fahrgastraum angeordnet ist/sind und somit auch von diesem aus zugänglich ist/sind. So können diese beispielsweise in einem Wartungsfall leicht und ohne großen Aufwand ausgetauscht werden. Auch ist die Anordnung des Kraftübertragungsmittels zum Beispiel an bzw. entlang einer Innenseite des den Fahrgastraum umgebenden Fahrzeugaufbaus in einfacher Weise und ohne großen Aufwand möglich. Auch eine temporäre Demontage der Laderaumabdeckung, beispielsweise für den Transport besonders sperriger Gegenstände, ist auf diese Weise einfach durchführbar.

Gemäß der Erfindung ist die Laderaumabdeckung an der Heckklappe über die Hakenverbindung lösbar befestigt. Besonders vorteilhaft ist es, wenn auch das Kraftübertragungsmittel lösbar an der Laderaumabdeckung befestigt und/oder lösbar am Fahrzeugaufbau befestigt ist. Beispielsweise kann das Kraftübertragungsmittel an der Laderaumabdeckung und/oder am Fahrzeugaufbau eingehängt, eingehakt, eingeklippt sein und dergleichen. So kann die Laderaumabdeckung bei Bedarf vollständig aus dem Fahrgastraum des Kraftfahrzeugs entfernt werden.

Der Verschwenkmechanismus der Laderaumabdeckung zum Freigeben und Verschließen des Zugangs zum Laderaum kann erfindungsgemäß einen sehr einfachen und kostengünstig herstellbaren Aufbau aufweisen, da die Laderaumabdeckung einerseits lediglich schwenkbeweglich an der Heckklappe zu befestigen ist und andererseits das Kraftübertragungsmittel zwischen dem Fahrzeugaufbau und der Laderaumabdeckung, umgelenkt über das an der Heckklappe angebrachte Kraftumlenkmittel, angeordnet und eine die Laderaumabdeckung am Fahrzeugaufbau haltende Verbindung bereitstellend vorgesehen ist.

Die vorstehend beschriebene Hakenverbindung stellt einen leicht und kostengünstig realisierbaren Verschwenkmechanismus der Laderaumabdeckung zum Freigeben und Verschließen des Laderaumzugangs in Abhängigkeit von einem Aufschwenkwinkel der Heckklappe dar. Zudem lässt sich die Hakenverbindung einfach manuell und zerstörungsfrei lösen, um die Laderaumabdeckung bei Bedarf vollständig aus dem Fahrgastraum des Kraftfahrzeugs zu entfernen.

Weitere Merkmale und Vorteile der Erfindung ergeben sich aus der folgenden Beschreibung nicht einschränkend zu verstehender Ausführungsbeispiele der Erfindung, die im Folgenden unter Bezugnahme auf die Zeichnung näher erläutert werden. In dieser Zeichnung zeigen schematisch:
- Fig. 1: eine Seitenschnittansicht eines hinteren Bereichs eines Ausführungsbeispiels eines Kraftfahrzeugs mit einer Laderaumabdeckung und einer geschlossenen Heckklappe,
- Fig. 2: eine Seitenschnittansicht des hinteren Bereichs des Kraftfahrzeugs aus Fig. 1 mit geöffneter Heckklappe,
- Fig. 3: eine perspektivische Ansicht auf den hinteren Bereich des Kraftfahrzeugs aus Fig. 1 bei geschlossener Heckklappe von hinten links,
- Fig. 4: eine perspektivische Ansicht auf den hinteren Bereich des Kraftfahrzeugs aus Fig. 3 mit geöffneter Heckklappe von hinten links,
- Fig. 5: eine perspektivische Ansicht auf die Laderaumabdeckung des Kraftfahrzeugs aus Fig. 3,
- Fig. 6: eine Draufsicht auf die Laderaumabdeckung aus Fig. 5,
- Fig. 7: eine Teilansicht eines weiteren Ausführungsbeispiels einer Laderaumabdeckung,
- Fig. 8: eine perspektivische Innenansicht auf einen hinteren Seiteninnenbereich des Kraftfahrzeugs aus Fig. 1 bei geschlossener Heckklappe mit der Laderaumabdeckung aus Fig. 7,
- Fig. 9: eine vergrößerte Teilansicht aus Fig. 8, die ein Ausführungsbeispiel einer Anbindung eines Kraftübertragungsmittels an die Laderaumabdeckung zeigt,
- Fig. 10: eine vergrößerte Teilansicht aus Fig. 8, die ein Ausführungsbeispiel einer schwenkbeweglichen Halterung der Laderaumabdeckung an die Heckklappe zeigt,
- Fig. 11: eine perspektivische Schnittansicht entlang der in Fig. 10 gezeigten Schnittlinie A-A,
- Fig. 12: eine Seitenschnittansicht durch den Laderaum des Kraftfahrzeugs aus Fig. 8 entlang seiner Mittellängsebene mit einem im Laderaum befindlichen übergroßen Gegenstand,
- Fig. 13: eine Seitenansicht der schwenkbeweglichen Halterung aus Fig. 10,
- Fig. 14: eine vergrößerte Teilansicht der schwenkbeweglichen Halterung aus Fig. 13,
- Fig. 15: eine Seitenschnittansicht eines hinteren Bereichs eines weiteren Ausführungsbeispiels eines Kraftfahrzeugs mit einer Laderaumabdeckung und einer geschlossenen Heckklappe,
- Fig. 16: eine Seitenschnittansicht des hinteren Bereichs des Kraftfahrzeugs aus Fig. 15 mit geöffneter Heckklappe,
- Fig. 17: eine perspektivische Innenansicht auf einen hinteren Seiteninnenbereich des Kraftfahrzeugs aus Fig. 15 bei geschlossener Heckklappe,
- Fig. 18: eine vergrößerte Teilansicht aus Fig. 17, die ein Kraftübertragungsmittel und ein Kraftumlenkmittel zeigt,
- Fig. 19: eine Draufsicht auf die Laderaumabdeckung aus Fig. 5,
- Fig. 20: eine vergrößerte Teilansicht aus Fig. 19, die ein weiteres Ausführungsbeispiel einer schwenkbeweglichen Halterung der Laderaumabdeckung an eine Heckklappe zeigt,
- Fig. 21: eine vergrößerte Teilansicht der schwenkbeweglichen Halterung aus Fig. 20,
- Fig. 22: eine Seitenschnittansicht eines hinteren Bereichs eines weiteren Ausführungsbeispiels eines Kraftfahrzeugs mit einer Laderaumabdeckung und einer geschlossenen Heckklappe,
- Fig. 23: den hinteren Bereich des Kraftfahrzeugs aus Fig. 22 mit geöffneter Heckklappe,
- Fig. 24: einen heckseitigen Bereich eines weiteren Ausführungsbeispiels eines Kraftfahrzeugs mit einer Laderaumabdeckung und einer geöffneten Heckklappe,
- Fig. 25: eine seitliche Innenansicht einer rechten Fahrzeugseite des Kraftfahrzeugs aus Fig. 24 bei geschlossener Heckklappe und
- Fig. 26: eine Detailansicht des heckseitigen rechten Bereichs des Kraftfahrzeugs aus Fig. 24 bei geöffneter Heckklappe.

In den unterschiedlichen Figuren sind hinsichtlich ihrer Funktion gleichwertige Teile stets mit denselben Bezugszeichen versehen, so dass diese in der Regel auch nur einmal beschrieben werden.

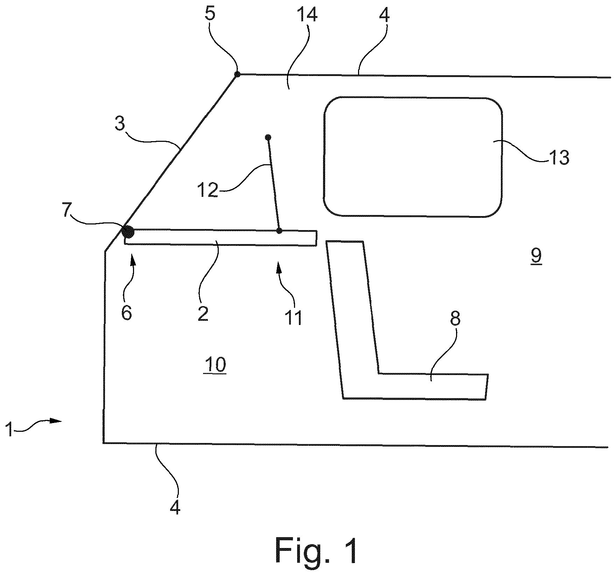

Fig. 1 stellt schematisch eine Seitenschnittansicht eines hinteren Bereichs eines Ausführungsbeispiels eines Kraftfahrzeugs 1 mit einer Laderaumabdeckung 2 und einer geschlossenen Heckklappe 3 dar. Insbesondere stellt Fig. 1 eine Seitenschnittansicht durch das Kraftfahrzeug 1 entlang seiner Mittellängsebene (entspricht hier der Zeichenebene) auf die linke Fahrzeugseite dar. Das hier gezeigte Ausführungsbeispiel des Kraftfahrzeugs 1 ist insbesondere in seinem in Fig. 1 dargestellten hinteren Bereich bezüglich seiner Mittellängsebene im Wesentlichen symmetrisch aufgebaut, so dass hierin nachfolgend beschriebene Teile der linken Fahrzeugseite in gleicher Weise auch auf der in Fig. 1 nicht zu erkennenden rechten Fahrzeugseite des Kraftfahrzeugs 1 vorgesehen und entsprechend angeordnet sind.

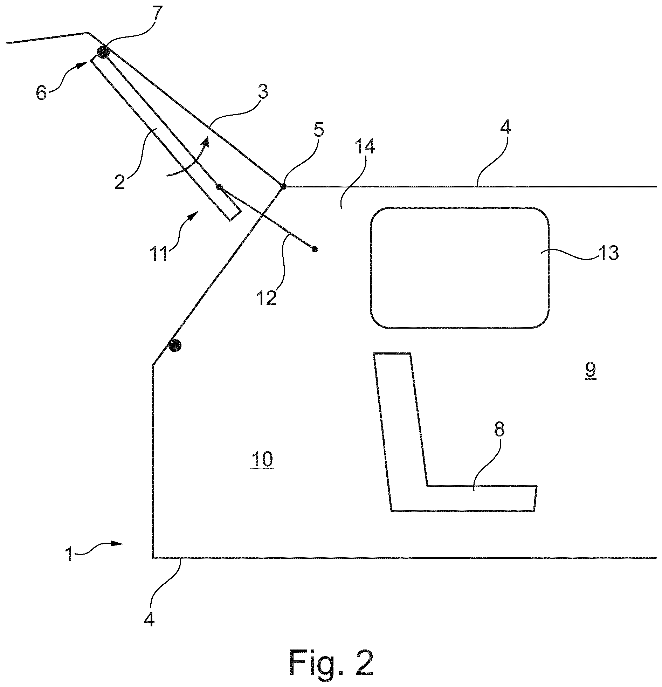

Wie Fig. 1 zu entnehmen ist, ist die Heckklappe 3 um eine an einem Fahrzeugaufbau 4, insbesondere an einem Dachbereich, festgelegte Heckklappenschwenkachse 5 nach hinten oben aufschwenkbar (siehe hierzu auch Fig. 2).

Des Weiteren ist in Fig. 1 zu erkennen, dass die Laderaumabdeckung 2 mit ihrem hinteren, der Heckklappe 3 zugewandten Endbereich 6 an der Heckklappe 3 um eine Schwenkachse 7 schwenkbeweglich befestigt ist. Die Laderaumabdeckung 2 deckt in dem in Fig. 1 dargestellten geschlossenen Zustand der Heckklappe 3 einen Zugang zu einem hinter einem Sitz 8 des Kraftfahrzeugs 1, der hier ein hinter einem nicht dargestellten Vordersitz des Kraftfahrzeugs 1 angeordneter Rücksitz des Kraftfahrzeugs 1 ist, gelegenen, innerhalb eines Fahrgastraums 9 befindlichen Laderaum 10 ab. Hierzu verläuft die Laderaumabdeckung 2 bei dem in Fig. 1 dargestellten Zustand im Wesentlichen horizontal zwischen ihrem an der Schwenkachse 7 schwenkbeweglich gehaltenen hinteren Endbereich 6 und einer rückwärtigen Sitzlehnenoberkante des Sitzes 8, an den ein vorderer, zur Schwenkachse 7 beabstandeter Endbereich 11 der Laderaumabdeckung 2 angrenzt.

Weiterhin ist Fig. 1 zu entnehmen, dass die Laderaumabdeckung 2 bei dem hier gezeigten Ausführungsbeispiel des Kraftfahrzeugs 1 an dem zur Schwenkachse 7 beabstandeten vorderen Endbereich 11 der Laderaumabdeckung 2 über ein Kraftübertragungsmittel 12 in Form eines in Kraftübertragungsrichtung im Wesentlichen nicht elastischen, lediglich Zugkräfte übertragenden Zugseils an dem Fahrzeugaufbau 4 gehalten ist. Insbesondere ist das Kraftübertragungsmittel 12 bei dem in Fig. 1 dargestellten Kraftfahrzeug 1 an einer hinter einem Fenster 13 gelegenen, der Heckklappe 3 unmittelbar vorgelagerten Fahrzeugsäule 14, hier eine C-Säule des Kraftfahrzeugs 1, am Fahrzeugaufbau 4 angebunden und befestigt. Es ist zu verstehen, dass bei Vorhandensein einer D-Säule in einem Kraftfahrzeug, die bezüglich einer Vorwärtsfahrtrichtung des Kraftfahrzeugs 1 hinter der C-Säule angeordnet und damit der Heckklappe 3 unmittelbar vorgelagert ist, die D-Säule anstelle der C-Säule bevorzugt als Anbindungsort des Kraftübertragungsmittels 12 am Fahrzeugaufbau 4 verwendet wird.

Fig. 2 stellt den hinteren Bereich des Kraftfahrzeugs 1 aus Fig. 1 mit geöffneter Heckklappe 3 dar. Wie hier zu erkennen ist, befindet sich die Heckklappe 3 in einem um die Heckklappenschwenkachse 5 nach hinten oben aufgeschwenkten Zustand, wobei die Laderaumabdeckung 2 durch das Kraftübertragungsmittel bzw. Zugseil 12 beim Aufschwenken der Heckklappe 3 den Zugang zum Laderaum 10 freigebend zur Heckklappe 3 hin verschwenkt wird und in dem dargestellten Zustand gehalten ist, um einen größtmöglichen Zugang zum Laderaum 10 bereitzustellen. Dies wird dadurch erreicht, dass das in Kraftübertragungsrichtung im Wesentlichen nicht elastische und sich folglich in Kraftübertragungsrichtung nicht verlängernde Kraftübertragungsmittel 12 die Laderaumabdeckung 2 beim Aufschwenken der Heckklappe 3 nach vorne oben zieht, wodurch der vordere Endbereich 11 der Laderaumabdeckung 2 um die Schwenkachse 7 in Richtung Heckklappe 3 geschwenkt wird.

Da die Fig. 1 und 2 lediglich die linke Fahrzeugseite des Kraftfahrzeugs 1 darstellen, das Kraftfahrzeug 1 jedoch insbesondere in seinem dargestellten hinteren Bereich im Wesentlichen symmetrisch aufgebaut ist, ist zu verstehen, dass an der in den Fig. 1 und 2 nicht gezeigten rechten Fahrzeugseite ebenfalls ein Kraftübertragungsmittel 12 am vorderen Endbereich 11 der rechten Seite der Laderaumabdeckung 2 und am rechtsseitigen Fahrzeugaufbau 4, insbesondere an der rechten C-Säule 14 des Kraftfahrzeugs 1, angebunden ist.

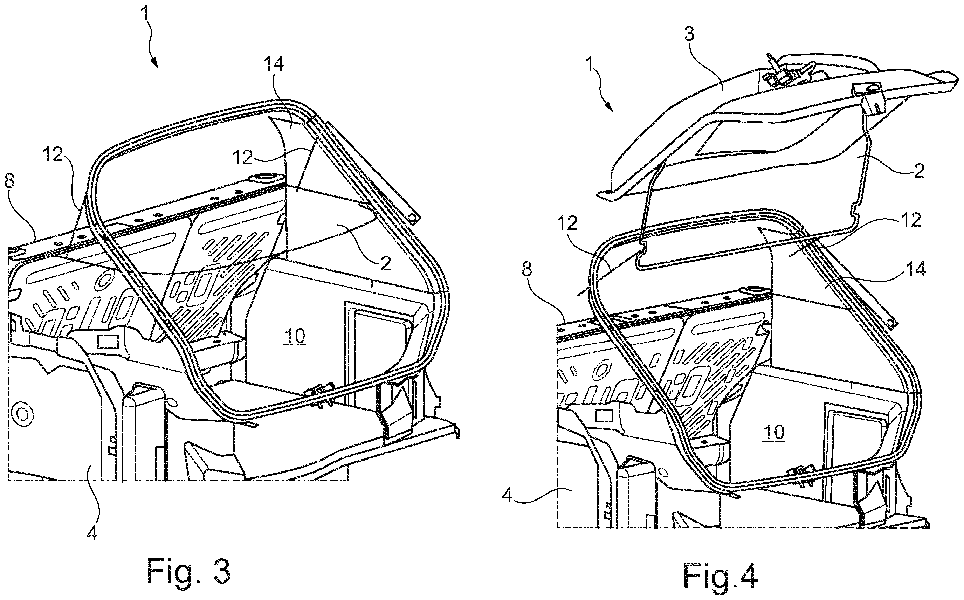

Fig. 3 stellt eine perspektivische Ansicht auf den hinteren Bereich des Kraftfahrzeugs 1 aus Fig. 1 bei geschlossener Heckklappe 3 von hinten links dar, wobei in der in Fig. 3 dargestellten Ansicht die Heckklappe 3 nicht zu sehen ist, um den Blick auf die Laderaumabdeckung 2 und den Laderaum 10 freizugeben.

In Fig. 3 ist weiterhin zu erkennen, dass das Kraftfahrzeug 1 in besonders vorteilhafter Weise keine seitlichen, gewöhnlich am Fahrzeugaufbau 4 angebrachten Stützauflagen für die Laderaumabdeckung 2 aufweist, auf denen eine gewöhnliche Laderaumabdeckung im geschlossenen Zustand der Heckklappe 3 aufliegen würde. Die Position der Laderaumabdeckung 2 des Kraftfahrzeugs 1 gemäß der Erfindung wird lediglich durch die Kraftübertragungsmittel 12 und die schwenkbewegliche Halterung an der Heckklappe 3 festgelegt. Der Zugang zum Laderaum 10 lässt sich durch das Weglassen der seitlichen Stützauflagen für die Laderaumabdeckung 2 weiter vergrößern. Dies gilt im Übrigen auch für alle nachfolgend noch beschriebenen, erfindungsgemäßen Ausführungsbeispiele.

Fig. 4 stellt eine perspektivische Ansicht auf den hinteren Bereich des Kraftfahrzeugs 1 aus Fig. 3 mit geöffneter Heckklappe von hinten links dar.

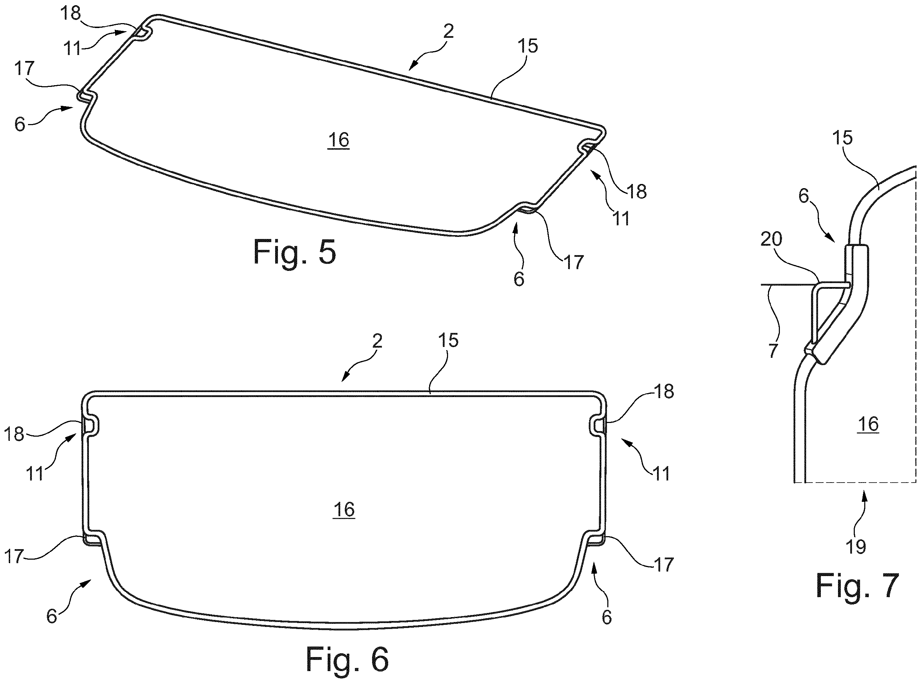

Fig. 5 stellt eine perspektivische Ansicht auf die Laderaumabdeckung 2 des Kraftfahrzeugs 1 aus Fig. 3 dar und Fig. 6 stellt eine Draufsicht auf diese Laderaumabdeckung 2 dar. Wie zu erkennen ist, ist die Laderaumabdeckung 2 aus einem die Laderaumabdeckung 2 umfänglich umgebenden Rahmen 15 gebildet, der beispielsweise aus einem Leichtmetall oder aus einem Kunststoff gefertigt sein kann. Der Rahmen 15 spannt in dem dargestellten Ausführungsbeispiel der Laderaumabdeckung 2 ein Textilgewebe 16 auf, das die eigentliche (Ablage- oder Sichtschutz-) Fläche der Laderaumabdeckung 2 bildet. Auf diese Weise kann die Laderaumabdeckung 2 in vorteilhafter Weise mit einem geringen Gewicht und einer geringen Bauhöhe hergestellt werden, so dass eine Montage bzw. Demontage der Laderaumabdeckung 2 am Kraftfahrzeug 1 ohne großen Kraftaufwand durchführbar ist und sie außerdem nach einer Demontage im Kraftfahrzeug 1 platzsparend untergebracht werden kann.

Des Weiteren ist den Fig. 5 und 6 zu entnehmen, dass die Laderaumabdeckung 2 in ihrem hinteren, der Heckklappe 3 zugewandten Endbereich 6 zwei jeweils in ein hakenförmiges Haltemittel (hier nicht dargestellt) einhakbare, ösenförmige Gegenhaltemittel 17 aufweist. Weiterhin weist die Laderaumabdeckung 2 in ihrem vorderen, zum hinteren Endbereich 6 beabstandeten Endbereich 11 zwei weitere Haltemittel 18 auf, mit denen jeweils eines der Kraftübertragungsmittel 12 verbindbar ist. Bei der Laderaumabdeckung 2 sind sowohl die beiden hinteren Gegenhaltemittel 17 als auch die beiden vorderen Haltemittel 18 durch einen nicht von dem Textilgewebe 16 bedeckten Abschnitt des Rahmens 15 gebildet, so dass hierfür keine zusätzlichen Bauteile vorzusehen sind.

Fig. 7 stellt eine Teilansicht eines weiteren Ausführungsbeispiels einer Laderaumabdeckung 19 dar, die ebenfalls in allen hierin beschriebenen Ausführungsbeispielen von Kraftfahrzeugen anstelle der Laderaumabdeckung 2 verwendbar ist. Die Teilansicht stellt einen Seitenteil des hinteren Endbereichs 6 der Laderaumabdeckung 19 dar.

Der wesentliche Unterschied zur in den Fig. 5 und 6 dargestellten Laderaumabdeckung 2 besteht darin, dass im hinteren Endbereich 6 der Laderaumabdeckung 19 zu beiden Seiten jeweils ein in ein hakenförmiges Haltemittel (hier nicht dargestellt) einhakbares, ösenförmiges Gegenhaltemittel 20 vorgesehen ist, das in diesem Fall nicht durch den Rahmen 15 selbst gebildet ist, sondern als separates Bauteil an den Rahmen 15 anbringbar ist. Beispielsweise kann das Gegenhaltemittel 20 auf den Rahmen 15 gesteckt, geklemmt und dergleichen und/oder mit diesem verklebt sein. Der Vorteil dieser Ausgestaltung ist, dass im Textilgewebe 16 für das Bereitstellen der Gegenhaltemittel 20 keine Aussparung vorgesehen werden muss und die (Ablage- bzw. Sichtschutz-) Fläche der Laderaumabdeckung 19 somit vollständig geschlossen sein kann. Wie in Fig. 7 angedeutet ist, wird durch das Gegenhaltemittel 20 die Schwenkachse 7 festgelegt.

Obwohl in Fig. 7 lediglich ein Gegenhaltemittel 20 gezeigt ist, ist zu verstehen, dass das auf der gegenüberliegenden, nicht dargestellten Seite der Laderaumabdeckung 19 angeordnete zweite hintere Gegenhaltemittel 20 ebenfalls auf diese Weise ausgebildet sein kann. Ebenso können die beiden vorderen Haltemittel (nicht dargestellt) zur Anbindung des Kraftübertragungsmittels 12 ebenfalls in dieser Art ausgebildet sein.

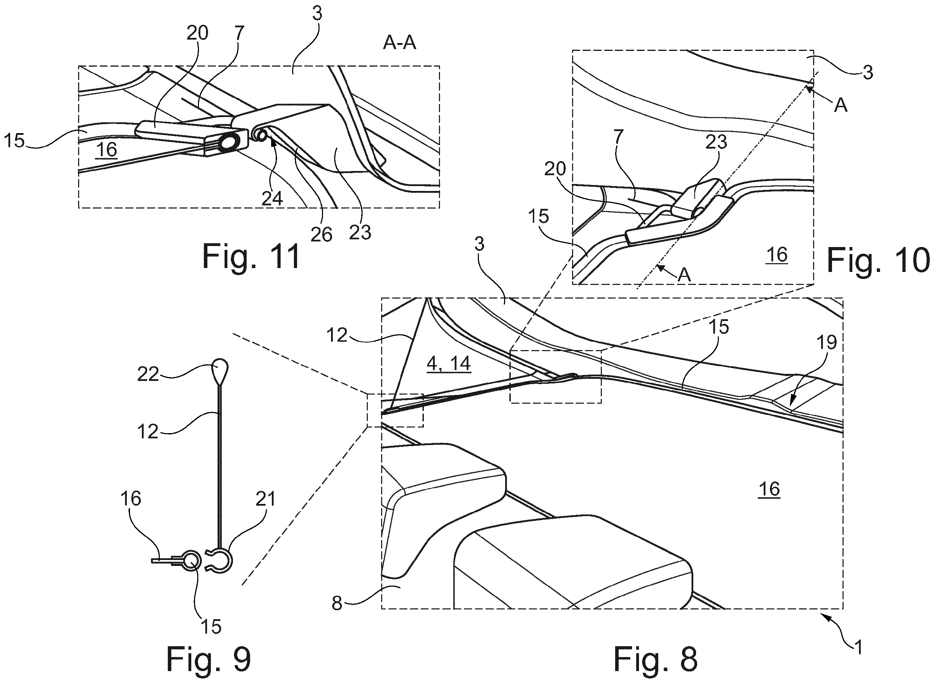

Fig. 8 stellt eine perspektivische Innenansicht auf einen hinteren Seiteninnenbereich des Kraftfahrzeugs 1 aus Fig. 1 bei geschlossener Heckklappe mit der Laderaumabdeckung 19 aus Fig. 7 dar. Fig. 9 stellt eine vergrößerte Teilansicht aus Fig. 8 dar, die ein Ausführungsbeispiel einer Anbindung des Kraftübertragungsmittels 12 an die Laderaumabdeckung 19 gemäß der Erfindung zeigt. Fig. 10 stellt eine vergrößerte Teilansicht aus Fig. 8 dar, die ein Ausführungsbeispiel einer schwenkbeweglichen Halterung der Laderaumabdeckung 19 an die Heckklappe 3 gemäß der Erfindung zeigt. Fig. 11 stellt eine perspektivische Schnittansicht entlang der in Fig. 10 gezeigten Schnittlinie A-A dar.

In den Fig. 8 und 9 ist zu erkennen, dass das Kraftübertragungsmittel 12 an seinem laderaumabdeckungsseitigen Ende ein Ω-förmiges (Omega-förmiges) Verbindungsmittel 21 aufweist, das unmittelbar auf den Rahmen 15 der Laderaumabdeckung 19 lösbar aufsteckbar ist. Ein spezielles Haltemittel 18, wie bei der Laderaumabdeckung 2 der Fig. 5 und 6 gezeigt, ist bei der Laderaumabdeckung 19 nicht erforderlich. An dem, dem Ω-förmigen Verbindungsmittel 21 gegenüberliegenden Ende des Kraftübertragungsmittels 12 ist ein für die Verbindung mit dem Fahrzeugaufbau 4 bzw. hier mit der C-Säule 14 geeignetes zweites Verbindungsmittel 22 vorgesehen.

Alternativ zum in Fig. 9 gezeigten laderaumabdeckungsseitigen, auf den Rahmen 15 der Laderaumabdeckung 19 lösbar aufsteckbaren Verbindungsmittel 21 kann dieses auch unlösbar mit der Laderaumabdeckung 19 verbunden sein, zum Beispiel an dem Textilgewebe 16 angenäht sein. Das fahrzeugaufbauseitige Verbindungsmittel 22 kann mit dem Fahrzeugaufbau 4 bzw. hier der C-Säule 14 lösbar, zum Beispiel mittels einer Haken- oder Clipverbindung, oder unlösbar verbunden sein. In dem Fall, in dem das Kraftübertragungsmittel 12 unlösbar mit der Laderaumabdeckung 19 verbunden ist, ist das fahrzeugaufbauseitige Verbindungsmittel 22 bevorzugt lösbar mit dem Fahrzeugaufbau 4 verbunden, um eine leichte Demontierbarkeit der Laderaumabdeckung 19 aus dem Kraftfahrzeug 1 zu gewährleisten.

In den Fig. 10 und 11 ist die die Schwenkachse 7 festlegende, die Laderaumabdeckung 19 mit der Heckklappe 3 schwenkbeweglich verbindende Hakenverbindung deutlich zu erkennen. Die Hakenverbindung weist ein in diesem Beispiel mit der Heckklappe 3 fest verbundenes hakenförmiges Haltemittel 23 auf, mit welchem das Gegenhaltemittel 20 der Laderaumabdeckung 19 in Eingriff bringbar ist.

Insbesondere ist das hakenförmige Haltemittel 23 bei dem gezeigten Ausführungsbeispiel des Kraftfahrzeugs 1 derart ausgebildet und angeordnet, dass dieses das Gegenhaltemittel 20 der Laderaumabdeckung 19 bei der Aufschwenkbewegung der Heckklappe 3 formschlüssig hält und das Gegenhaltemittel 20 bei der zur Aufschwenkbewegung entgegengesetzten Abschwenkbewegung der Heckklappe 3 ab einer der Abschwenkbewegung entgegenstehenden, auf die Laderaumabdeckung 19 einwirkenden Kraft einer vorherbestimmbaren Größe zerstörungsfrei freigibt.

Wie insbesondere in Fig. 11 deutlich zu erkennen ist, ist das hakenförmige Haltemittel 23 in dem Bereich, der mit dem Gegenhaltemittel 20 der Laderaumabdeckung 19 in Eingriff bringbar ist, im Wesentlichen J-förmig ausgebildet, wobei es eine umfängliche Unterbrechung 24 aufweist, die zur Heckklappe 3 hin ausgerichtet ist. Durch die Unterbrechung 24 ist das Gegenhaltemittel 20 der Laderaumabdeckung 19 in den Haken einführbar und zerstörungsfrei auch wieder aus diesem lösbar.

Die in Fig. 11 gezeigte Ausbildung und Anordnung des hakenförmigen Haltemittels 23 zum Gegenhaltemittel 20 der Laderaumabdeckung 19 bewirkt, dass bei der Aufschwenkbewegung der Heckklappe 3 nach hinten oben, der Haken des Haltemittels 23 eine formschlüssige, schwenkbewegliche Verbindung mit dem Gegenhaltemittel 20 der Laderaumabdeckung 19 bildet.

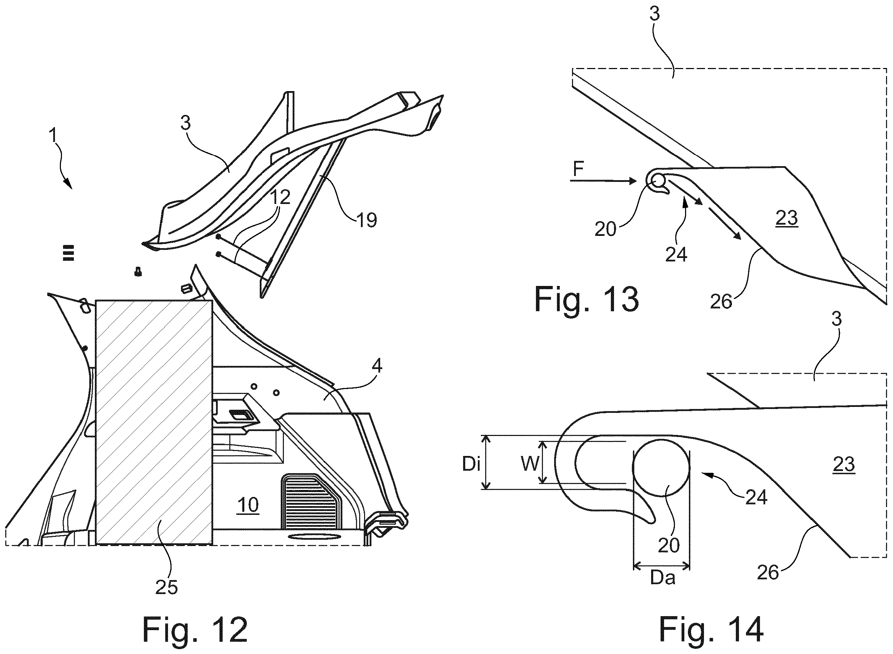

In Fig. 12, die eine Seitenschnittansicht durch den Laderaum 10 des Kraftfahrzeugs 1 aus Fig. 8 entlang seiner Mittellängsebene (entspricht der Zeichenebene) mit einem im Laderaum 10 befindlichen übergroßen Gegenstand 25 zeigt, ist jedoch eine Situation beim Abschwenken der Heckklappe 3 in ihre Schließstellung dargestellt, in welcher die Laderaumabdeckung 19 aufgrund des übergroßen Gegenstands 25 im Laderaum 10 mit ihrer Vorderkante gegen den Gegenstand 25 stoßen wird und folglich zwischen dem Gegenstand 25 und der Innenseite der Heckklappe 3 eingeklemmt werden kann, was infolgedessen zu einer Beschädigung des Gegenstands 25 führen könnte.

Wird nun die Bewegung der Laderaumabdeckung 19 beim Abschwenken der Heckklappe 3 blockiert, wie hier durch den übergroßen Gegenstand 25, führt die von dem Gegenstand 25 auf die Laderaumabdeckung 19 hierbei ausgeübte Gegenkraft F (siehe Fig. 13) dazu, dass sich das Gegenhaltemittel 20 der Laderaumabdeckung 19 durch die umfängliche Unterbrechung 24 des hakenförmigen Haltemittels 23 zerstörungsfrei aus dem formschlüssigen Eingriff mit dem Haltemittel 23 löst, wie in einer in Fig. 13 dargestellten Seitenansicht des hakenförmigen Haltemittels 23 aus Fig. 10 leicht zu erkennen ist. Um hierbei ein mögliches Einklemmen der Laderaumabdeckung 19 an der Innenseite der Heckklappe 3 sicher zu verhindern, weist das hakenförmige Haltemittel 23 zusätzlich eine zu einer Innenseite der Heckklappe 3 beabstandete Gleitfläche 26 auf, entlang welcher das Gegenhaltemittel 20 der Laderaumabdeckung 19 nach seiner Freigabe durch das hakenförmige Haltemittel 23 gleitet und geführt ist.

Fig. 14 stellt eine vergrößerte Teilansicht der schwenkbeweglichen Halterung aus Fig. 13 kurz nach dem Lösen des Eingriffs des Gegenhaltemittels 20 der Laderaumabdeckung 19 aus dem hakenförmigen Haltemittel 23 dar. In Fig. 14 ist zu erkennen, dass das hakenförmige Haltemittel 23 eine innenseitige Haltefläche mit Ωförmiger Kontur aufweist, die eine Außenseite des mit dem hakenförmigen Haltemittel 23 in Eingriff stehenden Gegenhaltemittels 20 umfänglich bereichsweise umgibt. Ein größter Innendurchmesser Di der innenseitigen Haltefläche des hakenförmigen Haltemittels 23 weist eine Größe auf, die wenigstens der Größe eines Außendurchmessers Da der mit dem hakenförmigen Haltemittel 23 in Eingriff bringbaren Außenseite des Gegenhaltemittels 20 entspricht (Di ≥ Da). Weiterhin ist zu erkennen, dass der direkte Abstand der die umfängliche Unterbrechung 24 des hakenförmigen Haltemittels 23 begrenzenden Enden (= Öffnungsweite W) kleiner ist als der Innendurchmesser Di der Ω-förmigen Kontur der innenseitigen Haltefläche des Haltemittels 23. Über die Differenz zwischen der Öffnungsweite W und dem Innendurchmesser Di lässt sich die Höhe einer Widerstandskraft festlegen, deren Überwindung erforderlich ist, um das in formschlüssigem Eingriff mit dem hakenförmigen Haltemittel 23 stehende Gegenhaltemittel 20 der Laderaumabdeckung 19 aus diesem Eingriff zu lösen, wie es beispielsweise in Fig. 13 gezeigt ist.

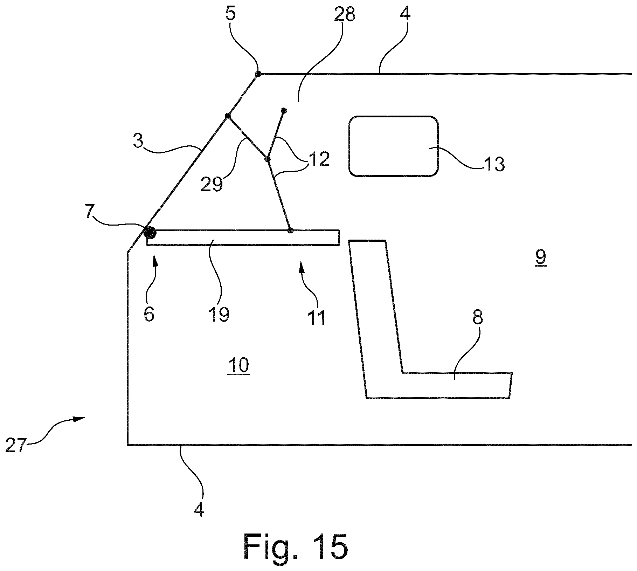

Fig. 15 stellt eine Seitenschnittansicht eines hinteren Bereichs eines weiteren Ausführungsbeispiels eines Kraftfahrzeugs 27 mit einer Laderaumabdeckung 19 und einer geschlossenen Heckklappe 3 dar. Insbesondere stellt Fig. 15 eine Seitenschnittansicht durch das Kraftfahrzeug 27 entlang seiner Mittellängsebene (entspricht hier der Zeichenebene) auf die linke Fahrzeugseite dar. Das hier gezeigte Ausführungsbeispiel des Kraftfahrzeugs 27 ist insbesondere in seinem in Fig. 15 dargestellten hinteren Bereich bezüglich seiner Mittellängsebene im Wesentlichen symmetrisch aufgebaut, so dass hierin nachfolgend beschriebene Teile der linken Fahrzeugseite in gleicher Weise auch auf der in Fig. 27 nicht zu erkennenden rechten Fahrzeugseite des Kraftfahrzeugs 27 vorgesehen und entsprechend angeordnet sind.

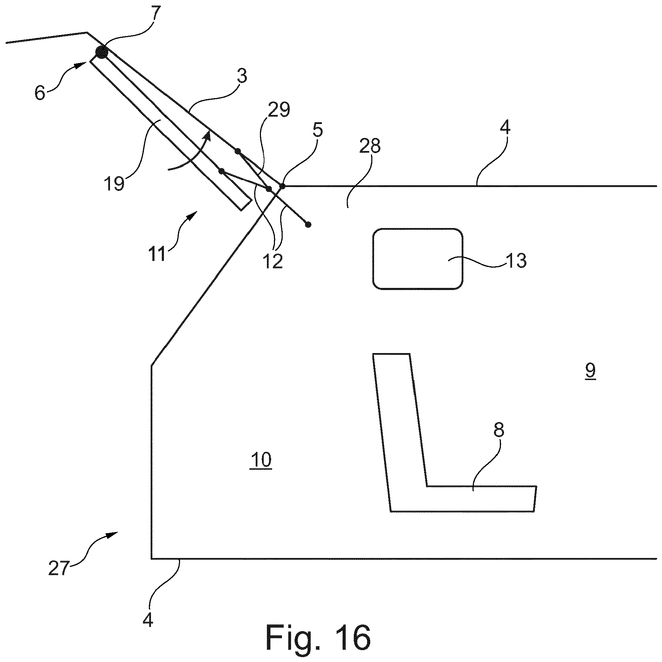

Wie Fig. 15 zu entnehmen ist, ist die Heckklappe 3 um eine an einem Fahrzeugaufbau 4, insbesondere an einem Dachbereich, festgelegte Heckklappenschwenkachse 5 nach hinten oben aufschwenkbar (siehe hierzu auch Fig. 16).

Des Weiteren ist in Fig. 15 zu erkennen, dass die Laderaumabdeckung 19 mit ihrem hinteren, der Heckklappe 3 zugewandten Endbereich 6 an der Heckklappe 3 um eine Schwenkachse 7 schwenkbeweglich befestigt ist. Die Laderaumabdeckung 19 deckt in dem in Fig. 15 dargestellten geschlossenen Zustand der Heckklappe 3 einen Zugang zu einem hinter einem Sitz 8 des Kraftfahrzeugs 27, der hier ein hinter einem nicht dargestellten Vordersitz des Kraftfahrzeugs 27 angeordneter Rücksitz des Kraftfahrzeugs 27 ist, gelegenen, innerhalb eines Fahrgastraums 9 befindlichen Laderaum 10 ab. Hierzu verläuft die Laderaumabdeckung 19 bei dem in Fig. 15 dargestellten Zustand im Wesentlichen horizontal zwischen ihrem an der Schwenkachse 7 schwenkbeweglich gehaltenen hinteren Endbereich 6 und einer rückwärtigen Sitzlehnenoberkante des Sitzes 8, an den ein vorderer, zur Schwenkachse 7 beabstandeter Endbereich 11 der Laderaumabdeckung 19 angrenzt.

Weiterhin ist Fig. 15 zu entnehmen, dass die Laderaumabdeckung 19 bei dem hier gezeigten Ausführungsbeispiel des Kraftfahrzeugs 27 an dem zur Schwenkachse 7 beabstandeten vorderen Endbereich 11 der Laderaumabdeckung 19 über ein Kraftübertragungsmittel 12 in Form eines in Kraftübertragungsrichtung im Wesentlichen nicht elastischen, lediglich Zugkräfte übertragenden Zugseils an dem Fahrzeugaufbau 4 gehalten ist. Insbesondere ist das Kraftübertragungsmittel 12 bei dem in Fig. 15 dargestellten Kraftfahrzeug 27 an einer hinter einem Fenster 13 gelegenen, der Heckklappe 3 unmittelbar vorgelagerten Fahrzeugsäule 28, hier eine D-Säule des Kraftfahrzeugs 27, am Fahrzeugaufbau 4 angebunden und befestigt. Es ist zu verstehen, dass bei Vorhandensein lediglich einer der Heckklappe 3 unmittelbar vorgelagerten C-Säule in einem Kraftfahrzeug diese C-Säule anstelle der D-Säule 28 bevorzugt als Anbindungsort des Kraftübertragungsmittels 12 am Fahrzeugaufbau 4 verwendet wird.

Im Unterschied zum in den Fig. 1 und 2 dargestellten Kraftfahrzeug 1 ist das Kraftübertragungsmittel 12 beim Kraftfahrzeug 27 zusätzlich an einem an der Heckklappe 3 angebrachten Kraftumlenkmittel 29 umgelenkt. Bei dem dargestellten Ausführungsbeispiel des Kraftfahrzeugs 27 ist das Kraftübertragungsmittel 12 ein Zugseil und das Kraftumlenkmittel 29 ein an dem Kraftübertragungsmittel 12 befestigtes, schräg oder quer zum Kraftübertragungsmittel 12 verlaufendes Umlenkzugseil.

Fig. 16 stellt den hinteren Bereich des Kraftfahrzeugs 27 aus Fig. 15 mit geöffneter Heckklappe 3 dar. Wie hier zu erkennen ist, befindet sich die Heckklappe 3 in einem um die Heckklappenschwenkachse 5 nach hinten oben aufgeschwenkten Zustand, wobei die Laderaumabdeckung 19 durch das Kraftübertragungsmittel bzw. Zugseil 12 beim Aufschwenken der Heckklappe 3 den Zugang zum Laderaum 10 freigebend zur Heckklappe 3 hin verschwenkt wird und in dem dargestellten Zustand gehalten ist. Das Kraftumlenkmittel 29 bewirkt beim Aufschwenken der Heckklappe 3, dass das Kraftübertragungsmittel 12 in der geöffneten Stellung der Heckklappe 3 weiter nach oben gezogen wird, wodurch die Laderaumabdeckung 19 ebenfalls weiter um die Schwenkachse 7 in Richtung zur Heckklappe 3 hin schwenkt. Hierdurch wird ein größtmöglicher Zugang zum Laderaum 10 bereitgestellt. Dies wird zusätzlich dadurch begünstigt, dass das in Kraftübertragungsrichtung im Wesentlichen nicht elastische und sich folglich in Kraftübertragungsrichtung nicht verlängernde Kraftübertragungsmittel 12 sowie das in Kraftübertragungsrichtung im Wesentlichen ebenfalls nicht elastische und sich folglich in Kraftübertragungsrichtung ebenfalls nicht verlängernde Kraftumlenkmittel 29 die Laderaumabdeckung 19 beim Aufschwenken der Heckklappe 3 nach vorne oben ziehen, wodurch der vordere Endbereich 11 der Laderaumabdeckung 19 um die Schwenkachse 7 in Richtung Heckklappe 3 geschwenkt wird.

Da die Fig. 15 und 16 lediglich die linke Fahrzeugseite des Kraftfahrzeugs 27 darstellen, das Kraftfahrzeug 27 jedoch insbesondere in seinem dargestellten hinteren Bereich im Wesentlichen symmetrisch aufgebaut ist, ist zu verstehen, dass an der in den Fig. 15 und 16 nicht gezeigten rechten Fahrzeugseite des Kraftfahrzeugs 27 ebenfalls ein Kraftübertragungsmittel 12 am vorderen Endbereich 11 der rechten Seite der Laderaumabdeckung 19 und am rechtsseitigen Fahrzeugaufbau 4, insbesondere an der rechten D-Säule 28 des Kraftfahrzeugs 27, angebunden ist und das Kraftübertragungsmittel 12 ebenfalls durch ein an der rechten Fahrzeugseite der Heckklappe 3 angebrachtes Kraftumlenkmittel 29 umgelenkt ist.

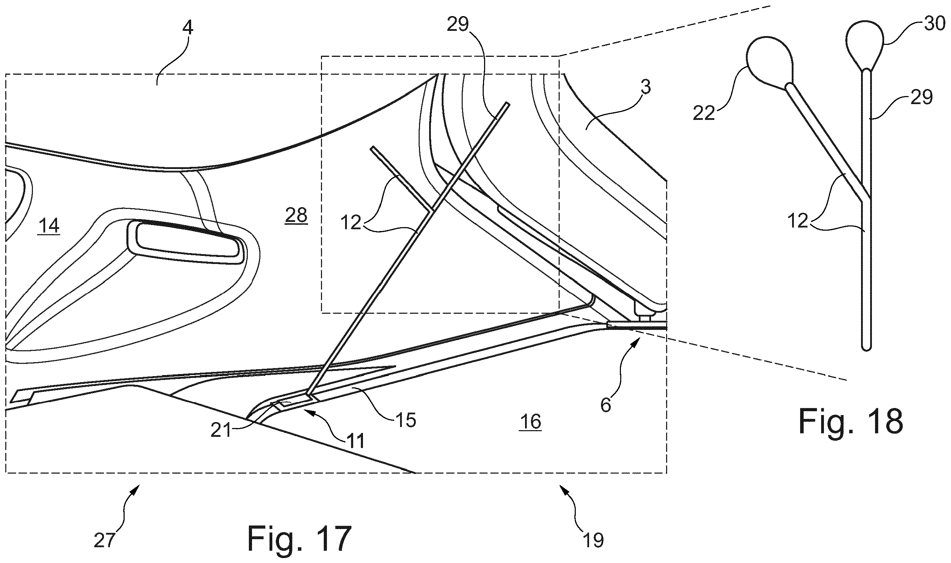

Fig. 17 stellt eine perspektivische Innenansicht auf einen hinteren Seiteninnenbereich des Kraftfahrzeugs 27 aus Fig. 15 bei geschlossener Heckklappe dar. Das Kraftübertragungsmittel 12 weist an seinem laderaumabdeckungsseitigen Ende ein Ω-förmiges (Omega-förmiges) Verbindungsmittel 21 auf, das unmittelbar auf den Rahmen 15 der Laderaumabdeckung 19 lösbar aufsteckbar ist. Ein spezielles Haltemittel 18, wie bei der Laderaumabdeckung 2 der Fig. 5 und 6 gezeigt, ist bei der Laderaumabdeckung 19 nicht erforderlich. An dem, dem Ω-förmigen Verbindungsmittel 21 gegenüberliegenden Ende des Kraftübertragungsmittels 12 ist ein für die Verbindung mit dem Fahrzeugaufbau 4 bzw. hier mit der D-Säule 28 geeignetes zweites Verbindungsmittel 22 vorgesehen.

Alternativ zum in Fig. 17 gezeigten laderaumabdeckungsseitigen, auf den Rahmen 15 der Laderaumabdeckung 2 lösbar aufsteckbaren Verbindungsmittel 21 kann dieses auch unlösbar mit der Laderaumabdeckung 19 verbunden sein, zum Beispiel an dem Textilgewebe 16 angenäht sein. Das fahrzeugaufbauseitige Verbindungsmittel 22 kann mit dem Fahrzeugaufbau 4 bzw. hier der D-Säule 28 lösbar, zum Beispiel mittels einer Haken- oder Clipverbindung, oder unlösbar verbunden sein. In dem Fall, in dem das Kraftübertragungsmittel 12 unlösbar mit der Laderaumabdeckung 19 verbunden ist, ist das fahrzeugaufbauseitige Verbindungsmittel 22 bevorzugt lösbar mit dem Fahrzeugaufbau 4 verbunden, um eine leichte Demontierbarkeit der Laderaumabdeckung 19 aus dem Kraftfahrzeug 27 zu gewährleisten.

Fig. 18 stellt eine vergrößerte Teilansicht aus Fig. 17 dar, die das Kraftübertragungsmittel 12 und das Kraftumlenkmittel 29 zeigt. Die Befestigung des Kraftumlenkmittels 29 am Kraftübertragungsmittel 12 kann lösbar, zum Beispiel mittels einer Steck-, Klemm- oder Clipverbindung, oder unlösbar, zum Beispiel durch Annähen am Kraftübertragungsmittel 12, erfolgen. Wie Fig. 18 weiter zeigt, kann ein heckklappenseitiges Verbindungsmittel 30 des Kraftumlenkmittels 29 ähnlich dem fahrzeugaufbauseitigen Verbindungsmittel 22 des Kraftübertragungsmittels 12 ausgebildet sein, also zum Beispiel lösbar mittels einer Haken- oder Clipverbindung an der Heckklappe 3 befestigt sein oder unlösbar.

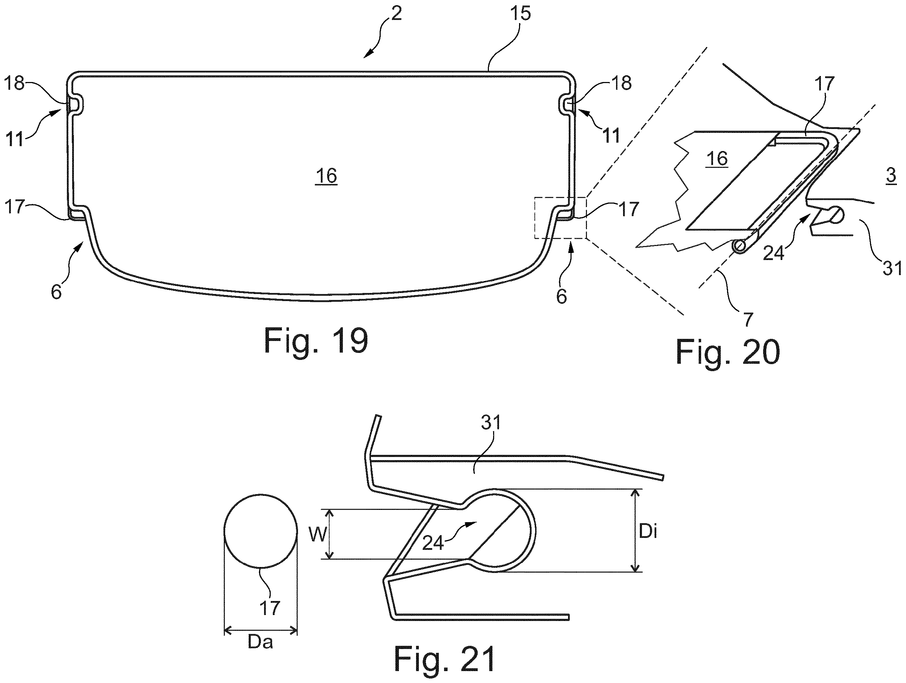

Fig. 19 stellt eine Draufsicht auf die Laderaumabdeckung 2 aus Fig. 5 dar und Fig. 20 eine vergrößerte Teilansicht aus Fig. 19, die ein weiteres Ausführungsbeispiel einer schwenkbeweglichen Halterung der Laderaumabdeckung 2 an eine Heckklappe 3 gemäß der Erfindung zeigt.

Insbesondere ist Fig. 20 zu entnehmen, dass die schwenkbewegliche Halterung der Laderaumabdeckung 2 an der Heckklappe 3 wenigstens eine die Heckklappe 3 mit der Laderaumabdeckung 2 verbindende, die Schwenkachse 7 festlegende Hakenverbindung aufweist, die ein mit der Heckklappe 3 fest verbundenes hakenförmiges Haltemittel 31 und das mit diesem in Eingriff bringbare Gegenhaltemittel 17 aufweist.

Wie insbesondere in Fig. 20 deutlich zu erkennen ist, ist das hakenförmige Haltemittel 31 im Wesentlichen U-förmig ausgebildet und weist eine umfängliche Unterbrechung 24 auf, die zur Laderaumabdeckung 2 hin ausgerichtet ist. Durch die Unterbrechung 24 ist das Gegenhaltemittel 17 der Laderaumabdeckung 2 in den Haken einführbar und zerstörungsfrei auch wieder aus diesem lösbar.

Fig. 21 stellt eine vergrößerte Teilansicht der schwenkbeweglichen Halterung aus Fig. 20 dar. In Fig. 21 ist zu erkennen, dass das hakenförmige Haltemittel 31 eine innenseitige Haltefläche mit Ω-förmiger Kontur aufweist, die eine Außenseite des mit dem hakenförmigen Haltemittel 31 in Eingriff bringbaren Gegenhaltemittels 17 umfänglich bereichsweise umgibt. Ein größter Innendurchmesser Di der innenseitigen Haltefläche des hakenförmigen Haltemittels 31 weist eine Größe auf, die wenigstens der Größe eines Außendurchmessers Da der mit dem hakenförmigen Haltemittel 31 in Eingriff bringbaren Außenseite des Gegenhaltemittels 17 entspricht (Di ≥ Da). Weiterhin ist zu erkennen, dass der direkte Abstand der die umfängliche Unterbrechung 24 des hakenförmigen Haltemittels 31 begrenzenden Enden (= Öffnungsweite W) kleiner ist als der Innendurchmesser Di der Ω-förmigen Kontur der innenseitigen Haltefläche des Haltemittels 31. Über die Differenz zwischen der Öffnungsweite W und dem Innendurchmesser Di lässt sich die Höhe einer Widerstandskraft festlegen, deren Überwindung erforderlich ist, um das in formschlüssigem Eingriff mit dem hakenförmigen Haltemittel 31 stehende Gegenhaltemittel 17 der Laderaumabdeckung 2 aus diesem Eingriff zu lösen.

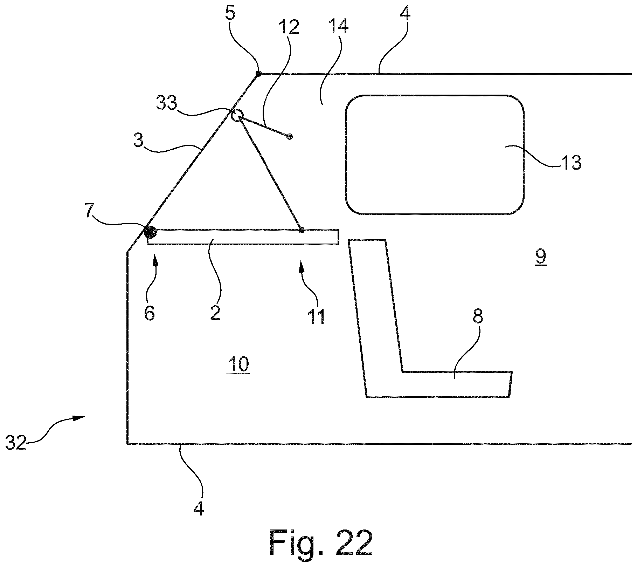

Fig. 22 stellt schematisch eine Seitenschnittansicht eines hinteren Bereichs eines noch weiteren Ausführungsbeispiels eines Kraftfahrzeugs 32 mit einer Laderaumabdeckung 2 und einer geschlossenen Heckklappe 3 gemäß der Erfindung dar. Insbesondere stellt Fig. 22 eine schematische Seitenquerschnittsansicht durch das Kraftfahrzeug 32 entlang seiner Mittellängsebene (entspricht hier der Zeichenebene) dar. In Fig. 22 ist demnach der Teil der, bezogen auf die Vorwärtsfahrtrichtung, linken Fahrzeugseite dargestellt. Das hier gezeigte Ausführungsbeispiel des Kraftfahrzeugs 32 ist insbesondere in seinem dargestellten hinteren Bereich bezüglich der Mittellängsebene im Wesentlichen symmetrisch aufgebaut, so dass hierin nachfolgend beschriebene Teile der linken Fahrzeugseite in gleicher Weise auch auf der in Fig. 22 nicht zu erkennenden rechten Fahrzeugseite vorgesehen und entsprechend angeordnet sind.

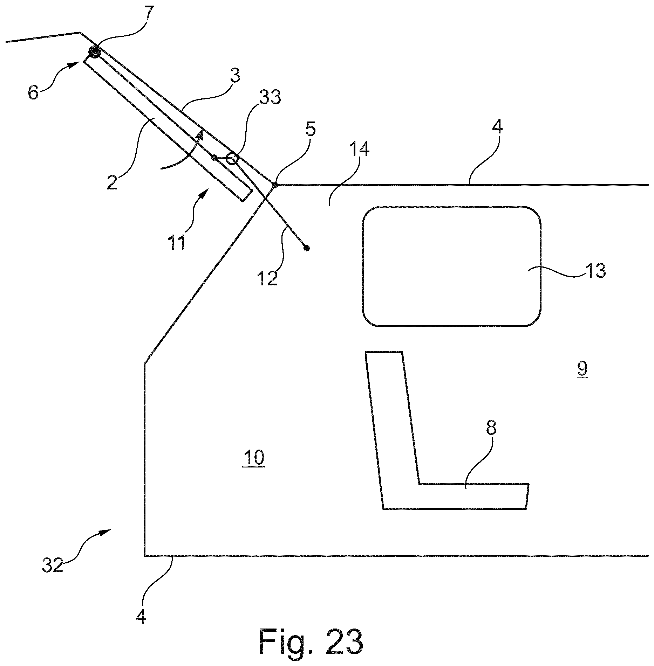

Wie Fig. 22 zu entnehmen ist, ist die Heckklappe 3 um eine an einem Fahrzeugaufbau 4, insbesondere an einem Dachbereich, festgelegte Heckklappenschwenkachse 5 nach hinten oben aufschwenkbar (siehe hierzu auch Fig. 23).

Des Weiteren ist in Fig. 22 zu erkennen, dass die Laderaumabdeckung 2 mit ihrem hinteren Endbereich 6 an der Heckklappe 3 um eine Schwenkachse 7 schwenkbeweglich befestigt ist. Die Laderaumabdeckung 2 deckt in dem in Fig. 22 dargestellten geschlossenen Zustand der Heckklappe 3 einen Zugang zu einem hinter einem Sitz 8 des Kraftfahrzeugs 32, der hier ein hinter einem nicht dargestellten Vordersitz des Kraftfahrzeugs 32 angeordneter Rücksitz des Kraftfahrzeugs 32 ist, gelegenen, innerhalb eines Fahrgastraums 9 befindlichen Laderaum 10 ab. Hierzu verläuft die Laderaumabdeckung 2 bei dem in Fig. 22 dargestellten Zustand im Wesentlichen horizontal zwischen ihrem an der Schwenkachse 7 schwenkbeweglich gehaltenen hinteren Endbereich 6 und einer rückwärtigen Sitzlehnenoberkante des Sitzes 8, an den ein vorderer Endbereich 11 der Laderaumabdeckung 2 angrenzt.

Weiterhin ist Fig. 22 zu entnehmen, dass die Laderaumabdeckung 2 bei dem hier gezeigten Ausführungsbeispiel des Kraftfahrzeugs 32 an dem zur Schwenkachse 7 beabstandeten vorderen Endbereich 11 der Laderaumabdeckung 2 über ein Kraftübertragungsmittel 12 in Form eines in Kraftübertragungsrichtung im Wesentlichen nicht elastischen, lediglich Zugkräfte übertragenden Zugseils an dem Fahrzeugaufbau 4 gehalten ist. Insbesondere ist das Kraftübertragungsmittel 12 bei dem in Fig. 22 dargestellten Kraftfahrzeug 32 an einer hinter einem Fenster 13 gelegenen, der Heckklappe unmittelbar vorgelagerten Fahrzeugsäule 14, hier eine C-Säule des Kraftfahrzeugs 32, am Fahrzeugaufbau 4 angebunden und befestigt.

In Fig. 22 ist des Weiteren ein das Kraftübertragungsmittel 12 umlenkendes, an der Heckklappe 3 angeordnetes und angebrachtes Kraftumlenkmittel 33 zu erkennen. Das Kraftumlenkmittel 33 kann zum Beispiel als Öse oder als Umlenkrolle ausgebildet sein.

Fig. 23 stellt den hinteren Bereich des Kraftfahrzeugs 32 aus Fig. 22 mit geöffneter Heckklappe 3 dar. Wie hier zu erkennen ist, befindet sich die Heckklappe 3 in einem um die Heckklappenschwenkachse 5 nach hinten oben aufgeschwenkten Zustand, wobei die Laderaumabdeckung 2 durch das Kraftübertragungsmittel bzw. Zugseil 12 beim Aufschwenken der Heckklappe 3 den Zugang zum Laderaum 10 freigebend verschwenkt und in dem dargestellten Zustand gehalten ist. Um einen größtmöglichen Zugang zum Laderaum 10 zu gewähren, ist die Laderaumabdeckung 2 bei vollständig geöffneter Heckklappe 3 im Wesentlichen vollständig parallel zur Heckklappe 3 angeordnet, wie in Fig. 23 dargestellt ist. Dies wird dadurch erreicht, dass der Abstand zwischen dem Kraftumlenkmittel 33 im in Fig. 22 dargestellten geschlossenen Zustand der Heckklappe 3 und der Anbindungsstelle des Kraftübertragungsmittels 12 im vorderen Endbereich 11 der Laderaumabdeckung 2 in etwa der Verschwenkstrecke des Kraftumlenkmittels 33 beim Aufschwenken der Heckklappe 3 entspricht, so dass durch die Aufschwenkbewegung der Heckklappe 3 und der hierdurch bewirkten Verschiebung des Kraftumlenkmittels 33 dieses das in Kraftübertragungsrichtung im Wesentlichen nicht elastische und sich folglich in Kraftübertragungsrichtung nicht verlängernde Kraftübertragungsmittel 12 nach oben zieht, wodurch der vordere Endbereich 11 der Laderaumabdeckung 2 um die Schwenkachse 7 in Richtung Heckklappe 3 geschwenkt wird.

Da die Fig. 22 und 23 lediglich die linke Fahrzeugseite des Kraftfahrzeugs 32 darstellen, das Kraftfahrzeug 32 jedoch insbesondere in seinem dargestellten hinteren Bereich im Wesentlichen symmetrisch aufgebaut ist, ist zu verstehen, dass an der in den Fig. 22 und 23 nicht gezeigten rechten Fahrzeugseite ebenfalls ein Kraftübertragungsmittel 12 am vorderen Endbereich 11 der rechten Seite der Laderaumabdeckung 2 und am rechtsseitigen Fahrzeugaufbau 4, insbesondere an der rechten C-Säule 14 des Kraftfahrzeugs 32, angebunden ist und das Kraftübertragungsmittel 12 ebenfalls durch ein an der rechten Fahrzeugseite der Heckklappe 3 angebrachtes Kraftumlenkmittel 33 geführt bzw. umgelenkt ist.

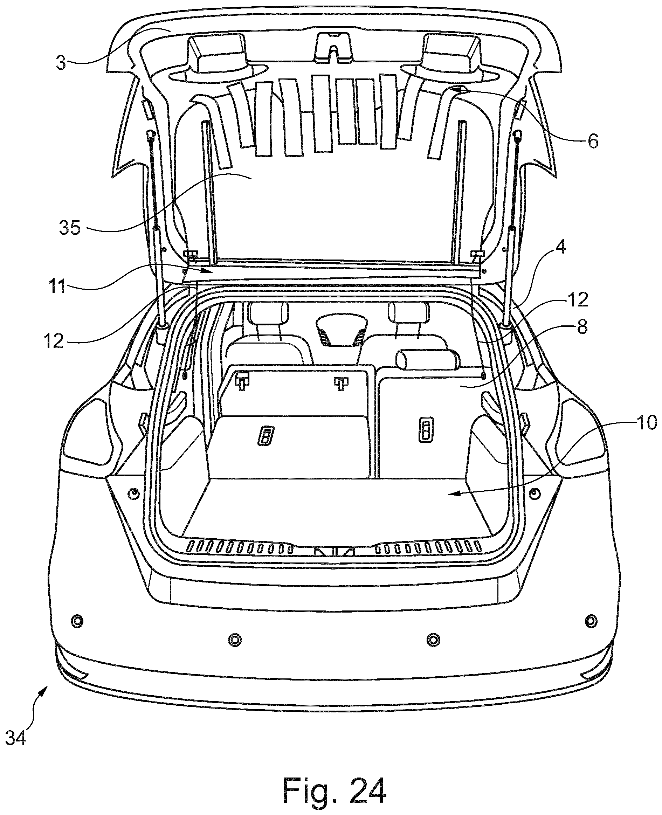

Fig. 24 stellt einen heckseitigen Bereich eines weiteren Ausführungsbeispiels eines Kraftfahrzeugs 34 mit einer Laderaumabdeckung 35 und geöffneter Heckklappe 3 dar. In Fig. 24 sind die auf beiden Seiten der Laderaumabdeckung 35 angeordneten Kraftübertragungsmittel 12, die hier ebenfalls als im Wesentlichen unelastische Zugseile ausgebildet sind, zu erkennen.

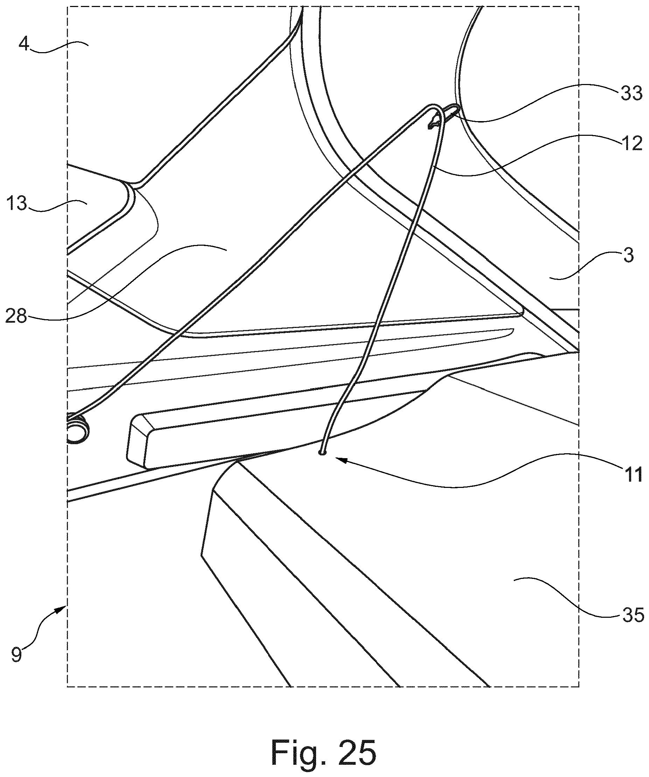

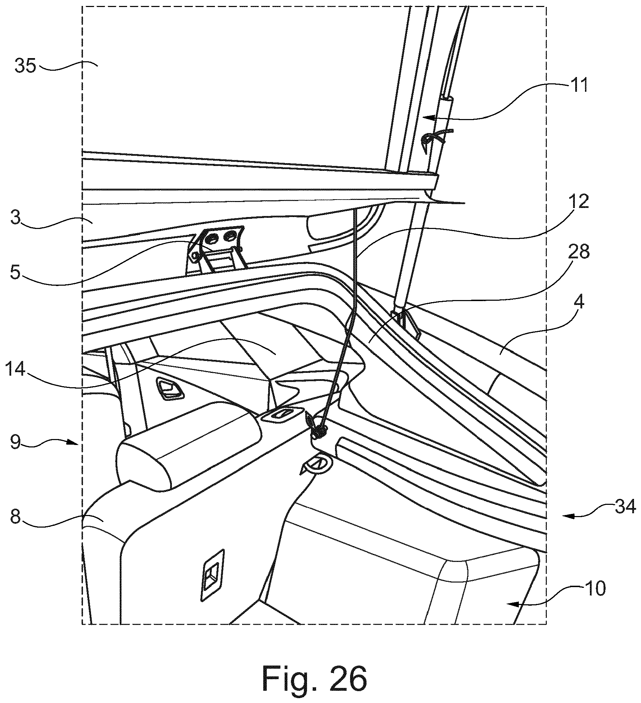

Fig. 25 stellt eine seitliche Innenansicht der rechten Fahrzeugseite des Kraftfahrzeugs 34 aus Fig. 24 mit geschlossener Heckklappe 3 dar. Deutlich ist zu erkennen, dass das Kraftübertragungsmittel 12 einenends am vorderen Endbereich 11 der Laderaumabdeckung 35 angebunden ist und anderenends am Fahrzeugaufbau 4 befestigt ist. Bei dem hier dargestellten Ausführungsbeispiel des Kraftfahrzeugs 34 erfolgt die fahrzeugaufbauseitige Anbindung des Kraftübertragungsmittels 12 an einer der Heckklappe 3 unmittelbar vorgelagerten D-Säule 28 des Kraftfahrzeugs 34, wie auch in Fig. 26 zu erkennen ist, die eine Detailansicht des heckseitigen rechten Bereichs des Kraftfahrzeugs 34 aus Fig. 24 mit geöffneter Heckklappe 3 und zusätzlich zu erkennender C-Säule 14 des Kraftfahrzeugs 34 darstellt.

Den Fig. 25 und 26 ist ferner deutlich zu entnehmen, dass das Kraftübertragungsmittel 12 und das Kraftumlenkmittel 33 bei dem dargestellten Ausführungsbeispiel des Kraftfahrzeugs 34 im Fahrgastraum 9 angeordnet sind und von diesem auch zugänglich sind.

Besonders bevorzugt ist die Laderaumabdeckung 35 an der Heckklappe 3 lösbar befestigt und das Kraftübertragungsmittel 12 lösbar an der Laderaumabdeckung 35 und/oder lösbar am Fahrzeugaufbau 4 befestigt.

Das vorstehend beschriebene erfindungsgemäße Kraftfahrzeug ist nicht auf die hierin offenbarten Ausführungsformen beschränkt, sondern umfasst auch gleich wirkende weitere Ausführungsformen, die sich aus technisch sinnvollen weiteren Kombinationen der hierin beschriebenen Merkmale ergeben.

### Bezugszeichenliste:

- 1: Kraftfahrzeug
- 2: Laderaumabdeckung
- 3: Heckklappe
- 4: Fahrzeugaufbau
- 5: Heckklappenschwenkachse
- 6: Hinterer Endbereich der Laderaumabdeckung
- 7: Schwenkachse
- 8: Sitz
- 9: Fahrgastraum
- 10: Laderaum
- 11: Vorderer Endbereich der Laderaumabdeckung
- 12: Kraftübertragungsmittel, Zugseil
- 13: Fenster
- 14: Fahrzeugsäule, C-Säule
- 15: Rahmen der Laderaumabdeckung
- 16: Textilgewebe
- 17: Gegenhaltemittel
- 18: Haltemittel
- 19: Laderaumabdeckung
- 20: Gegenhaltemittel
- 21: Laderaumabdeckungsseitiges, Ω-förmiges Verbindungsmittel
- 22: Fahrzeugaufbauseitiges Verbindungsmittel
- 23: Hakenförmiges Haltemittel
- 24: Umfängliche Unterbrechung
- 25: Übergroßer Gegenstand
- 26: Gleitfläche
- 27: Kraftfahrzeug
- 28: D-Säule
- 29: Kraftumlenkmittel, Umlenkzugseil
- 30: Heckklappenseitiges Verbindungsmittel
- 31: Hakenförmiges Haltemittel
- 32: Kraftfahrzeug
- 33: Kraftumlenkmittel, Öse
- 34: Kraftfahrzeug
- 35: Laderaumabdeckung
- Da: Außendurchmesser
- Di: Innendurchmesser
- F: Gegenkraft
- W: Öffnungsweite

## Patentansprüche

1. Kraftfahrzeug mit einer nach hinten oben aufschwenkbaren Heckklappe (3), an der mit ihrem hinteren, der Heckklappe (3) zugewandten Endbereich (6) eine Laderaumabdeckung (2, 19, 35) zur Abdeckung eines hinter einem Sitz (8) gelegenen, innerhalb eines Fahrgastraums (9) befindlichen Laderaums (10) um eine Schwenkachse (7) schwenkbeweglich gehalten ist, wobei die Laderaumabdeckung (2, 19, 35) an einem zur Schwenkachse (7) beabstandeten Bereich (11) über wenigstens ein Kraftübertragungsmittel (12) an einem Fahrzeugaufbau (4) gehalten ist, welches die Laderaumabdeckung (2, 19, 35) beim Aufschwenken der Heckklappe (3) einen Zugang zum Laderaum (10) freigebend zur Heckklappe (3) hin verschwenkt, wobei wenigstens eine die Heckklappe (3) mit der Laderaumabdeckung (2, 19, 35) verbindende, die Schwenkachse (7) festlegende Hakenverbindung (17, 20, 31) vorgesehen ist, die ein hakenförmiges Haltemittel (31) und ein mit diesem in Eingriff bringbares Gegenhaltemittel (17, 20) aufweist,
**dadurch gekennzeichnet, dass**
das hakenförmige Haltemittel (31) das Gegenhaltemittel (17, 20) bei einer Aufschwenkbewegung der Heckklappe (3) formschlüssig hält und bei einer zur Aufschwenkbewegung entgegengesetzten Abschwenkbewegung der Heckklappe (3) das Gegenhaltemittel (17, 20) ab einer der Abschwenkbewegung entgegenstehenden, auf die Laderaumabdeckung (2, 19, 35) einwirkenden Kraft (F) einer vorherbestimmbaren Größe zerstörungsfrei freigibt, und dass das Kraftübertragungsmittel (12) an einem an der Heckklappe (3) angebrachten Kraftumlenkmittel (29) umgelenkt ist, wobei das Kraftübertragungsmittel (12) ein Zugseil ist und das Kraftumlenkmittel (29) ein an dem Kraftübertragungsmittel (12) befestigtes, schräg oder quer zum Kraftübertragungsmittel (12) verlaufendes Umlenkzugseil (29) ist.

2. Kraftfahrzeug nach Anspruch 1,
**dadurch gekennzeichnet, dass**
das hakenförmige Haltemittel (31) eine innenseitige Haltefläche mit Ω-förmiger Kontur aufweist, die eine Außenseite des mit dem hakenförmigen Haltemittel (31) in Eingriff stehenden Gegenhaltemittels (17, 20) umfänglich bereichsweise umgibt.

3. Kraftfahrzeug nach Anspruch 1 oder 2,
**dadurch gekennzeichnet, dass**
ein größter Innendurchmesser (Di) der innenseitigen Haltefläche des hakenförmigen Haltemittels (31) eine Größe aufweist, die wenigstens der Größe eines Außendurchmessers (Da) der mit dem hakenförmigen Haltemittel (31) in Eingriff bringbaren Außenseite des Gegenhaltemittels (17, 20) entspricht.

4. Kraftfahrzeug nach einem der vorhergehenden Ansprüche,
**dadurch gekennzeichnet, dass**
die fahrzeugaufbauseitige Anbindung des Kraftübertragungsmittels (12) an einer der Heckklappe (3) vorgelagerten Fahrzeugsäule (14, 28) erfolgt.

## Claims

1. Motor vehicle with a tailgate (3) which can be pivoted up at the top towards the rear, and on which a luggage compartment cover (2, 19, 35) is held in a pivotably movable manner about a pivot axis (7) by way of its rear end region (6) which faces the tailgate (3), in order to cover a luggage compartment (10) which lies behind a seat (8) and is situated within a passenger compartment (9), the luggage compartment cover (2, 19, 35) being held at a region (11) which is spaced apart from the pivot axis (7) on a vehicle body (4) via at least one force transmission means (12) which luggage compartment cover (2, 19, 35), during pivoting up of the tailgate (3), pivots towards the tailgate (3) in a manner which enables access to the luggage compartment (10), at least one hook connection (17, 20, 31) being provided which connects the tailgate (3) to the luggage compartment cover (2, 19, 35), fixes the pivot axis (7), and has a hook-shaped holding means (31) and a counter-holding means (17, 20) which can be brought into engagement with the former, **characterized in that** the hook-shaped holding means (31) holds the counter-holding means (17, 20) in a positively locking manner in the case of a pivoting-up movement of the tailgate (3) and, in the case of a pivoting-down movement of the tailgate (3) which is opposed to the pivoting-up movement, releases the counter-holding means (17, 20) without destruction above a force of a predefinable magnitude which counteracts the pivoting-down movement and acts on the luggage compartment cover (2, 19, 35), and **in that** the force transmission means (12) is deflected at a force deflection means (29) which is attached to the tailgate (3), the force transmission means (12) being a pull cable, and the force deflection means (29) being a deflection pull cable (29) which is fastened to the force transmission means (12) and runs obliquely or transversely with respect to the force transmission means (12) .

2. Motor vehicle according to Claim 1, **characterized in that** the hook-shaped holding means (31) has an inner-side holding face with an omega-shaped contour which locally circumferentially surrounds an outer side of the counter-holding means (17, 20) which is in engagement with the hook-shaped holding means (31).

3. Motor vehicle according to Claim 1 or 2, **characterized in that** a greatest internal diameter (Di) of the inner-side holding face of the hook-shaped holding means (31) has a magnitude which corresponds at least to the magnitude of an external diameter (Da) of that outer side of the counter-holding means (17, 20) which can be brought into engagement with the hook-shaped holding means (31).

4. Motor vehicle according to one of the preceding claims, **characterized in that** the vehicle body-side attachment of the force transmission means (12) takes place on a vehicle pillar (14, 28) which is positioned ahead of the tailgate (3).

## Revendications

1. Véhicule automobile muni d'un hayon arrière (3) pivotable vers l'arrière en haut, sur lequel, avec sa zone d'extrémité arrière (6) tournée vers le hayon arrière (3), un recouvrement d'espace de chargement (2, 19, 35) pour le recouvrement d'un espace de chargement (10) situé derrière un siège (8), se trouvant à l'intérieur d'un habitacle (9), est retenu de manière mobile par pivotement autour d'un axe de pivotement (7), le recouvrement d'espace de chargement (2, 19, 35) étant retenu sur une zone (11) écartée de l'axe de pivotement (7) par l'intermédiaire d'au moins un moyen de transmission de force (12) sur une structure de véhicule (4), qui fait pivoter le recouvrement d'espace de chargement (2, 19, 35) vers le hayon arrière (3) lors du pivotement du hayon arrière (3) en libérant un accès à l'espace de chargement (10), au moins une liaison à crochet (17, 20, 31) reliant le hayon arrière (3) avec le recouvrement d'espace de chargement (2, 19, 35), définissant l'axe de pivotement (7), étant prévue, qui comprend un moyen de retenue en forme de crochet (31) et un moyen de retenue opposé (17, 20) pouvant être mis en prise avec celui-ci,
**caractérisé en ce que**
le moyen de retenue en forme de crochet (31) retient par accouplement de forme le moyen de retenue opposé (17, 20) lors d'un mouvement de pivotement du hayon arrière (3) et, lors d'un mouvement de contre-pivotement contraire au mouvement de pivotement du hayon arrière (3), libère de manière non destructive le moyen de retenue opposé (17, 20) à partir d'une force (F) d'une grandeur prédéterminable, opposée au mouvement de contre-pivotement, agissant sur le recouvrement d'espace de chargement (2, 19, 35), et **en ce que** le moyen de transmission de force (12) est dévié sur un moyen de déviation de force (29) monté sur le hayon arrière (3), le moyen de transmission de force (12) étant un câble de traction et le moyen de déviation de force (29) étant un câble de traction de déviation (29) attaché au moyen de transmission de force (12), s'étendant obliquement ou perpendiculairement au moyen de transmission de force (12) .

2. Véhicule automobile selon la revendication 1, **caractérisé en ce que** le moyen de retenue en forme de crochet (31) présente une surface de retenue intérieure à contour en forme d'Ω, qui entoure par zones en périphérie un côté extérieur du moyen de retenue opposé (17, 20) en prise avec le moyen de retenue en forme de crochet (31).

3. Véhicule automobile selon la revendication 1 ou 2, **caractérisé en ce qu'**un diamètre intérieur maximal (Di) de la surface de retenue intérieure du moyen de retenue en forme de crochet (31) présente une grandeur qui correspond au moins à la grandeur d'un diamètre extérieur (Da) du côté extérieur du moyen de retenue opposé (17, 20) pouvant être mis en prise avec le moyen de retenue en forme de crochet (31).

4. Véhicule automobile selon l'une quelconque des revendications précédentes, **caractérisé en ce que** la liaison côté structure de véhicule du moyen de transmission de force (12) a lieu sur une colonne de véhicule (14, 28) placée devant le hayon arrière (3).
